# EUROPÄISCHE PATENTSCHRIFT

(11) **EP 1 812 498 B1**
(45) Veröffentlichungstag und Bekanntmachung des Hinweises auf die Patenterteilung: **14.05.2014**
(21) Anmeldenummer: 05788698.8
(22) Anmeldetag: 22.09.2005
(51) Int. Cl.: C08G 77/24, C08G 77/26, C04B 41/49, C09D 183/10, C09D 183/08

(54) **FLÜSSIGE FLUORHALTIGE ZUSAMMENSETZUNGEN FÜR DIE OBERFLÄCHENBEHANDLUNG MINERALISCHER UND NICHTMINERALISCHER UNTERGRÜNDE**
LIQUID FLUORINE-CONTAINING COMPOSITIONS FOR TREATING THE SURFACES OF MINERAL AND NON-MINERAL SUBSTRATES
COMPOSITIONS LIQUIDES CONTENANT DU FLUOR POUR LE TRAITEMENT DE SURFACE DE SUBJECTILES MINERAUX ET NON MINERAUX

(30) Priorität: 24.09.2004 DE 102004046385
(43) Veröffentlichungstag der Anmeldung: 01.08.2007
(73) Patentinhaber: Evonik Degussa GmbH, 45128 Essen (DE)
(72) Erfinder: MAIER, Alois, 84549 Engelsberg (DE); STEIDL, Norbert, 83361 Kienberg (DE); SCHROERS, Michael, 83342 Tacherting (DE); WEINELT, Frank, 48727 Billerbeck (DE); SPIERLING, Marita, 8455 Feichten (DE)
(74) Vertreter: Dey, Michael
(86) Internationale Anmeldenummer: PCT/EP2005/010287
(87) Internationale Veröffentlichungsnummer: WO 2006/032512

(56) Entgegenhaltungen:
- EP-A- 0 572 179
- EP-A- 1 055 718
- DE-A- 2 827 508
- DATABASE WPI Section Ch, Week 200020 Derwent Publications Ltd., London, GB; Class E11, AN 2000-232962 XP002380116 & JP 2000 053686 A (YUSHI SEIHIN KK) 22. Februar 2000 (2000-02-22)

## Beschreibung

Fluorhaltige Organosilane, die zur gleichzeitigen Hydrophobierung und Oleophobierung mineralischer und nichtmineralischer Substrate eingesetzt werden können, sind aus der EP 0 846 715, der EP 846 716, der EP 846 717 und der EP 0 960 921 hinreichend bekannt. In den genannten Schriften werden fluoralkylfunktionelle Organopolysiloxane auf Wasser und/oder Alkoholbasis beschrieben, die auf fluorfunktionellen Organosilanen basieren. Die beschriebenen fluorfunktionellen Organosilane wie z.B. Tridecalluor-1,1,2,2-tetrahydrooctyl-trimethoxysilan und Tridecafluor-1,1,2,2-tetrahydrooctyl-triethoxysilan sind nur über technisch aufwendige Hydrosilylierungsreaktionen von Trialkoxysilanen an ungesättigte Verbindungen, beispielsweise an (Per)fluoroalkylalkene zugänglich. Da die technische Verfügbarkeit der (per)fluoralkylmodifizierten Alkene und damit der fluorfunktionellen Organosilane begrenzt ist, bestand der Bedarf nach alternativen fluorhaltigen Zusammensetzungen, die hinsichtlich der Perfluoroalkyl-Komponente eine größere synthetische Bandbreite ermöglichen und zugleich kostengünstiger als die bekannten Systeme hergestellt werden können. Gerade in der Bauchemie besteht ein Bedarf nach kostengünstigen, leistungsfähigen und breit einsetzbaren Hydrophobierungs- und Oleophobierungsmitteln für den Bautenschutz.

Das Dokument EP1055718 offenbart die Reaktion eines Perfluoroalkohols und eines Isocyanatosilans. Es offenbart jedoch nicht die Zuführung von Wasser, so dass ein Feststoff erhalten wird.

Der vorliegenden Erfindung lag daher die Aufgabe zugrunde, neuartige fluorhaltige Zusammensetzungen mit verbesserten Oberflächeneigenschaften zur permanenten öl-und wasserabweisenden Oberflächenbehandlung bzw. -modifizierung von mineralischen und nichtmineralischen Untergründen für verschiedene Anwendungsbereiche zu entwickeln, welche die genannten Nachteile des Standes der Technik nicht aufweisen, sondern sehr gute anwendungstechnische Eigenschaften besitzen und gleichzeitig unter Berücksichtigung ökologischer, ökonomischer und physiologischer Aspekte hergestellt werden können.

Diese Aufgabe wurde erfindungsgemäß durch die Bereitstellung von flüssigen fluorhaltigen Zusammensetzungen mit einem auf das Festharz bezogenen Fluörgehalt von 5 bis 75 Ges.-%, bevorzugt 10 bis 70 Gew. % gelöst, dadurch erhältlich, dass man zunächst
a) eine Perfluoralkyl-Komponente (A) dadurch herstellt, dass man
   a₁) 5 bis 95 Gew.%, vorzugsweise 10 bis 90 Gew. % einer (Per) fluoroalkylalkohol-Komponente (B)(i), umfassend Perfluoralkylalkohole mit terminalen Methylen-Gruppen (Kohlenwasserstoff-Spacem) der allgemeinen Formel

      CF₃-(CF₂)ₓ-(CH₂)_{y}-OH,

      mit x = 3 - 20 und y = 1 - 6,
      wobei bevorzugt x = 5 bis 13 und/oder y =1 bis 2 ist,
      und/oder
      Hexafluorpropenoxid (HFPO)-Oligomer-Alkoholen der allgemeinen Formel

      CF₃CF₂CF₂O-(CF(CF₃)CF₂O)_{z}-CF(CF₃)CH₂-OH,

      mit z =1-10,
      wobei bevorzugt z = 4 bis 10 ist,
      und/oder einer (Per) fluoroalkylalkylenamin-Komponente (B)(ii)
      und/oder
      fluormodifizierte Makromonomere oder Telechele (B)(iii) mit einem polymer gebundenem Fluorgehalt von 1 bis 99 Gew.-%, bevorzugt 10 bis 90 Gew.% , und einer Molekularmasse von 100 bis 10 000 Dalton, enthaltend die in der Hauptkette und/oder Seitenkette intrachenal und/oder lateral und/oder terminal angeordneten Strukturelemente

      -(CF₂CF₂)ₙ- mit n ≥ 3

      und/oder
      -(CF₂CFRO)ₙ mit n ≥ 3 und R = F, CF₃
      mit jeweils einer oder mehreren reaktiven aliphatischen und/oder aromatischen Hydroxyl-Gruppe(n) und/oder primären und/oder sekundären Amino-Gruppe(n) und/oder Mercapto-Gruppe(n),
      mit
      95 bis 5 Gew.%, bevorzugt 90 bis 10 Gew.% einer Isocyanatoalkyl-alkoxysilan-Komponente (C)(i), bestehend aus 3-Isocyanatopropyl-trialkoxysilan und/oder ein 3-Isocyanatopropylalkoxyalkylsilan und/oder Isocyanatoalkylalkoxysilane der allgemeinen Formel

      OCN-(CH₂)₃-Si(OR¹)₃₋ₓR²ₓ,

      mit x = 0, 1, 2
      R¹, R² = Alkyl mit 1 - 25 C-Atomen,
      und/oder einer anderen Isocyanatosilan-Komponente (C)(ii) einer Molekularmasse von 200 bis 2 000 Dalton, bevorzugt 200 bis 500 Dalton, mit einer oder mehreren (cyclo)aliphatischen und/oder aromatischen Isocyanato-Gruppe(n) und einer oder mehreren Alkoxysilan-Gruppe(n) der fluorhaltigen Zusammensetzungen umsetzt
      oder mit 95 bis 5 Gew.%, bevorzugt 90 bis 10 Gew.% einer Epoxyalkylolalkoxysilan-Komponente (F)(i), bestehend aus einem (substituiertem) 3-Glycidyloxypropyltrialkpxysilan der allgemeinen Formel

      CH₂OCH-CH₂O-(CH₂)₃-Si(OR¹)₃₋ₓR²ₓ,

      mit x = 0, 1, 2
      R¹, R² = Alkyl mit 1 - 25 C-Atomen, insbesondere 1 bis 4 C-Atomen,
      und/oder einer anderen Epoxysilan-Komponente (F)(ii) einer Molekularmasse von 200 bis 2 000 Dalton, bevorzugt 200 bis 1 000 Dalton, mit einer oder mehreren Epoxid-Gruppe(n) und einer oder mehreren Alkoxysilan-Gruppe(n) umsetzt
      oder
      anschließend
b) 5 bis 100 Gewichtsteile, bevorzugt 10 bis 95 Gewichtsteile der Perfluoralkyl-Komponente (A) aus der Stufe a) vor, während oder nach der Umsetzung in 0 bis 100 Gewichtsteilen, bevorzugt 0 bis 95 Gewichtsteilen einer Lösemittel-Komponente (K) löst,
c₁) die Perfluoralkyl-Komponente (A) aus den Stufen a) oder b) in Gegenwart von 0 bis 50 Gewichtsteilen, bevorzugt 0 bis 45 Gewichtsteilen einer Aminoalkylalkoxysilan-Komponente (E)(i) und/oder Aminosilan-Komponente (E) (ii) mit 1 bis 50 Gewichtsteilen, bevorzugt 5 bis 45 Gewichtsteilen Wasser (partiell) hydrolysiert bzw. silanolisiert,
c₂) das aminofunktionelle Addukt mit 1 bis 50, bevorzugt 5 bis 45 Gewichtsteilen einer Säure-Komponente (L) quaterniert,
c₃) ggf. den freigesetzten Alkohol und/oder die Lösemittel-Komponente (K) entfernt,
d₁) das Umsetzungsprodukt aus der Stufe c) anschließend oder gleichzeitig in 50 bis 1000, bevorzugt 100 bis 900 Gewichtsteilen Wasser auflöst und oligomerisiert,
d₂) ggf. den freigesetzten Alkohol und/oder die Lösemittel-Komponente (K) entfernt,
e) wobei ggf. während oder nach den Stufen a) und/oder b) und/oder c) und/oder d) in beliebiger Weise 0 bis 50, bevorzugt 0 bis 45 Gewichtsteile einer Formulierungs-Komponente (M) zugesetzt und/oder 0 bis 50, bevorzugt 0 bis 45 Gewichtsteile einer Funktionalisierungs-Komponente (N) zugesetzt und/oder mit umgesetzt werden.

Überraschenderweise wurde gefunden, dass durch die Verwendung der flüssigen fluorhaltigen Zusammensetzungen nicht nur wasserdampfdurchlässige Beschichtungssysteme zur permanenten öl-, wasser- und schmutzabweisenden Oberflächenbehandlung bzw. -modifizierung von mineralischen und nichtmineralischen Untergründen bereitgestellt werden können, sondern dass diese darüber hinaus auch noch im Vergleich zum Stand der Technik deutlich bessere anwendungstechnische Eigenschaften bei gleichem und niedrigerem Fluorgehalt aufweisen. Durch die Verwendung geeigneter fluorhaltiger Aufbaukomponenten konnten die kritischen Oberflächenspannungen γ_{c} und die Kontaktwinkel θ der fluorhaltigen Zusammensetzungen so optimiert werden, dass die hydrophoben und oleophoben Eigenschaften bereits bei sehr geringer Wirkstoffdosierung bzw. sehr geringem Fluorgehalt zum Tragen kommen. Zudem war nicht hervorsehbar, dass die fluormodifizierten Reaktivharzsysteme auch noch lösemittelfrei oder lösemittelarm hergestellt werden können.

Bei der Perfluoralkyl-Komponente (A) handelt es sich beispielsweise um Umsetzungsprodukte aus den Komponenten
(B)(i) und/oder (B)(ii) sowie ggf. (B)(iii) mit den Komponenten
(C)(i) und/oder (C)(ii) bzw.
(F)(ii) bzw.

Als geeignete (Per)fluoralkylalkylenalkohol-Komponente (B)(i) können beispielsweise handelsübliche Gemische aus Perfluoralkylalkoholen (Zonyl^{®} BA, BA L, BA LD, Fa. Du Pont de Nemours) oder handelsübliche Gemische aus Hexafluorpropenoxid (HFPO)-Oligomer-Alkoholen (Krytox^{®}, Fa. Du Pont de Nemours) oder geeignete Kombination daraus eingesetzt werden.

Als geeignete (Per)fluoroalkylalkylenalkohol-Komponente (B)(i) können beispielsweise außerdem 2,2-Bis(trifluoromethyl)propanol, 1H,1H-2,5-Di(trifluoromethyl)-3,6-dioxaundecafluorononanol, 1H,1H,7H-Dodecafluoroheptanol, 2,2,3,3,4,4,5,5,6,6,7,7-Dodecafluoro-1,8-octanediol, 1H,1H-Heptafluorobutanol, 1H,1H,9H-Hexadecafluorononanol, 1H,1H,3H-Hexafluorobutanol, 2H-Hexafluoro-2-propanol, 2,2,3,3,4,4,5,5-Octafluoro-1,6-hexanediol, 1H,1H,5H-Octafluoropentanol,1H,1H-Pentafluoropropanol, 2-(Perfluorobutyl)ethanol, 3-(Perfluorobutyl)propanol, 6-(Perfluorobutyl)hexanol, 1H,1H-Perfluoro-1-decanol, 2-(Perfluorodecyl)ethanol, 6-(Perfluoroethyl)hexanol, 2-(Perfluorohexyl)ethanol, 6-(Perfluorohexyl)hexanol, 3-(Perfluorohexyl)propanol, 1H,1H-Perfluoro-1-nonanol, 1H,1H-Perfluoro-1-octanol, 2-(Perfluorooctyl)ethanol, 6-(Perfluorooctyl)hexanol, 3-(Perfluorooctyl)propanol, 2-(Perfluoro-3-methylbutyl)ethanol, 6-(Perfluoro-1-methylethyl)hexanol, 2-(Perfluoro-5-methylhexyl)ethanol, 2-(Perfluoro-7-methyloctyl)ethanol, 2-Perfluoropropoxy-2,3,3,3-tetrafiuoropropanol, 1H,1H,3H-Tetrafluoropropanol,1,1,2,2-Tetrahydroperfluoro-1-hexadecanol, 1,1,2,2-Tetrahydroperfluoro-1-tetradecanol sowie 1H, 1H-Trifluoroethanol oder deren technische Isomerengemische, die Handelsprodukte Fluowet^{®} EA 600, EA 800, EA 093, EA 612, EA 612 N, EA 812 AC, EA 812 IW, EA 812 EP, EA6/1020 der Fa. Clariant, die Handelsprodukte Zonyl^{®} FSH, FSO, FSN, FS-300, FSN-100, FSO-100 der Fa. DuPont de Nemours oder geeignete Kombinationen daraus eingesetzt werden. Als geeignete (Per)fluoralkylalkylenamin-Komponente (B)(ii) können beispielsweise Umsetzungsprodukte aus 1H,1H,2H,2H-Tridecafluor-1-octyliodid, 1H,1H,2H,2H-Heptadecafluor-1-octyliodid und geeigneten Aminierungsreagentien oder geeignete Kombinationen daraus eingesetzt werden.

Als geeignete fluormodifizierte Makromonomere oder Telechele (B)(iii) können beispielsweise hydroxyfunktionelle Copolymere auf Basis von Tetrafluorethylen und Hydroxyalkyl(meth)acrylaten wie die Handelsprodukte Zeffle^{®} GK-500, GK-510, GK 550 der Fa. Daikin oder geeignete Kombinationen daraus eingesetzt werden.

Als geeignete Isocyanatoalkylalkoxysilan-Komponente (C)(i) und/oder Isocyanatosilan-Komponente (C)(ii) können beispielsweise die Handelsprodukte Silquest^{®} A-1310 Silane, Silquest^{®} A-Link™ 25 Silane, Silquest^{®} A-Link™ 35 Silane ((3-Isocyanatopropyl)trimethoxysilan), Silquest^{®} A-Link™ 597 Silane, Silquest^{®} FR-522 Silane, Silquest^{®} Y-5187 Silane der Fa. GE Silicons, die Handelsprodukte GENIOSIL^{®} GF 40 ((3-Isocyanatopropyl)trimethoxysilan), GENIOSIL^{®} XL 42 ((Isocyanatomethyl) methyldimethoxysilan), GENIOSIL^{®} XL 43 (Isocyanatomethyl)trimethoxysilan) der Fa. Wacker-Chemie GmbH oder geeignete Kombinationen daraus eingesetzt werden. Vorzugsweise wird 3-Isocyanatopropyltrimethoxysilan und/oder 3-Isocyanatopropyltriethoxysilan eingesetzt.

Als geeignete Epoxyalkylolalkoxysilan-Komponente (F)(i) oder Epoxysilan-Kompoenente (F)(ii) können beispielsweise die Handelsprodukte DYNASILAN^{®} GLYMO ((3-Glycidyloxypropyl)trimethoxysilan), DYNASILAN^{®} GLYEO ((3-Glycidyloxypropyl)triethoxysilan), DYNASILAN^{®} HS 2926 (HYDROSIL^{®} 2926) der Fa. Degussa AG, die Handelsprodukte CoatOSil^{®} 1770, Silquest^{®} A-187 Silane, Silquest^{®} A-186 Silane, Silquest^{®} WetLink 78 Silane der Fa. GE Silicones, die Handelsprodukte GENIOSIL^{®} GF 80 ((3-Glycidyloxypropyl)trimethoxysilan), GENIOSIL^{®} GF 82 ((3-Glycidyloxypropyl)triethoxysilan) der Fa. Wacker-Chemie GmbH oder geeignete Kombinationen daraus eingesetzt werden. Vorzugsweise werden 3-Glycidyloxypropyltrimethoxysilan und/oder 3-Glycidyloxypropyltriethoxysilan eingesetzt.

Bei der Lösemittel-Komponente (K) handelt es sich beispielsweise um niedrig-und/oder hochsiedende Solventien. Als geeignete Lösemittel können beispielsweise niedrigsiedende Solventien wie Methanol, Ethanol, Propanol, Isopropanol, n-Butanol, Isobutanol, tert.Butanol, Aceton, Methylethylketon, hochsiedende Solventien wie N-Methylpyrrolidon, Dipropylenglykoldimethylether (Handelsprodukt Proglyde^{®} DMM der Fa. Dow Chemical), cyclische Propylencarbonate oder geeignete Kombination daraus eingesetzt werden. Bei Verwendung von Lösemitten mit gegenüber den Komponenten (C) und/oder (D) und/oder (F) und/oder (G) reaktiven Wasserstoffatomen ist es bevorzugt, dass diese ggf. erst nach der Reaktionsstufe a) zugesetzt werden.

Bei der Säure-Komponente (L) handelt es sich beispielsweise um ein- oder mehrbasige anorganische und/oder organische Säuren. Als geeignete Säuren können beispielsweise organische Säuren wie Ameisensäure, Essigsäure, Propionsäure, Citronensäure, anorganische Säuren wie Salpetersäure, Salzsäure, Schwefelsäure, Kohlendioxid bzw. Kohlensäure, Phosphorsäure, saure Salze von Elementen der 1. bis 3. Hauptgruppe oder geeignete Kombinationen daraus eingesetzt werden. Vorzugsweise werden Ameisensäure und/oder Essigsäure und/oder Kohlendioxid eingesetzt.

Bei der Formulierungs-Komponente (M) handelt es sich beispielsweise um (funktionalisierte) anorganische und/oder organische Füllstoffe, Leichtfüllstoffe, Pigmente und Trägermaterialien, anorganische und/oder organische Nanomaterialien, anorganische und/oder organische Fasern, weitere Polymere und/oder Polymerdispersionen und/oder redispergierbare Polymer-Pulver aller Art, Entschäumer, Entlüfter, Gleit- und Verlaufadditive, Substratnetzadditive, Netz- und Dispergieradditive, Hydrophobierungsmittel, Rheologieadditive, Koaleszenzhilfsmittel, Mattierungsmittel, Haftvermittler, Frostschutzmittel, Antioxidantien, UV-Stabilisatoren, Bakterizide, Fungizide, Wasser, Lösemittel und Katalysatoren aller Art sowie geeignete Kombination daraus. Diese Bestandteile sind aus der Lack- und Beschichtungstechnologie hinreichend bekannt, vgl. dazu auch U. Zorll (Herausg.): Lehrbuch der Lacktechnologie, Curt R. Vincentz Verlag Hannover 1998.

Die Komponente (M) kann in beschichteter und/oder mikroverkapselter und/oder trägerfixierter und/oder hydrophilierter und/oder lösemittelhaltiger Form vorliegen.

Bei der Funktionalisierungs-Komponente (N) handelt es sich beispielsweise um niedermolekulare Polyole und/oder Polyamine einer Molekularmasse von 10 bis 1000, bevorzugt 32 bis 499 Dalton und/oder höhermolekulare (polymere) Polyole und/oder Polyamine einer Molekularmasse von 500 bis 10000 Dalton, bevorzugt 1,000 bis 5,000 Dalton und/oder anionisch und/oder kationisch modifizierbare (polymere) Polyole und/oder Polyamine und/oder (hydrophil oder hydrophob modifizierte) (polymere) Polyole einer Molekularmasse von 50 bis 10000, bevorzugt 118 bis 5000 Dalton mit einer oder mehreren Hydroxyl- und/oder AminoGruppe(n) und/oder (polymere) Verbindungen einer Molekularmasse von 250 bis 10000, bevorzugt 500 bis 5,000 Dalton, mit einer oder mehreren Alkoxysilan-Gruppe (n) und ggf. einer oder mehreren Amino- und/oder Hydroxyl- und/oder Mercapto-und/oder Isocyanato- und/oder Epoxid-Gruppe(n), wobei diese Verbindungen nicht aus den Komponenten (C), (E), (F) und (I) ausgewählt sind. Vorzugsweise werden Dimethylolpropionsäure und/oder Hydroxypivalinsäure und/oder 2(3)-Hydroxypropionsäure eingesetzt. Mit Hilfe der Funktionalisierungs-Komponente (N) können weitere funktionelle Gruppen in die fluorhaltigen Zusammensetzungen eingeführt werden. Die Verknüpfung kann dabei in beliebiger Weise über die Komponente (A) gemäß der Reaktionsstufe a) und/oder über Kondensationsreaktionen und/oder weitere Reaktionen gemäß den Reaktionsstufen b) bis d) erfolgen, wobei keine oligomeren Produkte, sondern definierte Urethanaddukte in monomerer Form gebildet werden. Mit Hilfe der Komponente (N) können beispielsweise Carboxyl- bzw. Carboxylat-Gruppen eingeführt werden, die in Kombination mit geeigneten Gegenanionen zu den Ammonium-Gruppen (z. B. Hydrogencarbonat) zu fluorhaltigen Zusammensetzungen mit den aus der Fachliteratur bekannten Coacervation-Eigenschaften führen.

Die fluorhaltigen Zusammensetzungen weisen einen Fluorgehalt von 5 bis 75 Gew.-%, bevorzugt 10 bis 70 Gew. %, bezogen auf das Festharz aus den Komponenten (B) und/oder (C) und/oder (F) und/oder (L) und/oder (N) auf und beinhalten die lateral und/oder terminal angeordneten Strukturelemente

-(CF₂CF₂)ₙ- mit n ≥ 3

und/oder

-(CF₂CFRO)ₙ- mit n ≥ 3 und R = F, CF₃

sowie

NR⁴₂H⁺R⁵CO₂⁻

und/oder

-NR⁴₂H⁺ HCO₃⁻ in Kombination mit-CO₂H

mit R⁴, R⁵ = H, beliebiger anorganischer und/oder organischer und ggf. polymerer Rest mit etwa 1 bis 100 C-Atomen, bevorzugt 1 bis 4 C-Atomen, und 0 bis 100, bevor-zugt 0 bis 10 N- und/oder 0 bis 100, bevorzugt 0 bis 10 O-und/oder 0 bis 1000, bevorzugt 0 bis 10 F- und/oder 0 bis 100, bevorzugt 0 bis 10 Si-Atomen.

Ein weiterer Gegenstand der vorliegenden Erfindung betrifft ein Verfahren zur Herstellung der erfindungsgemäßen fluorhaltigen Zusammensetzungen, dadurch gekennzeichnet, dass man
a) eine Perfluoralkyl-Komponente (A) durch Umsetzung
   der Komponenten (B)(i) und/oder (B)(ii) sowie ggf. (B)(iii) mit den Komponenten (C)(i) und/oder (C)(ii) bzw.
   (F)(i) und/oder (F)(ii) bzw.
   herstellt,
b) die Perfluoralkyl-Komponente (A) aus der Stufe a) vor, während, oder nach der Umsetzung ggf. in der Lösemittel-Komponente (K) löst,
c₁) die Perfluoralkyl-Komponente (A) aus den Stufen a) oder b) ggf. in Gegenwart einer weiteren Aminoalkylalkoxysilan-Komponente(E)(i) und/oder einer Aminosilan-Komponente (E)(ii) mit Wasser (partiell) hydrolysiert bzw. silanolisiert,
c₂) das aminofunktionelle Addukt mit einer Säure-Koniponente (L) quaterniert (direkte Neutralisation) und anschließend oder gleichzeitig in Wasser auflöst,
c₃) ggf. den freigesetzten Alkohol und/oder die Lösemittel-Komponente (K) entfernt,
d₁) das Umsetzungsprodukt aus der Stufe c) anschließend oder gleichzeitig in Wasser auflöst und oligomerisiert,
d₂) ggf. den freigesetzten Alkohol und/oder die Lösemittel-Komponente (K) abdestilliert,
e) wobei ggf. während oder nach den Stufen a) und/oder b) und/oder c) und/oder d) in beliebiger Weise eine Formulierungs-Komponente (M) zugesetzt und/oder eine Funktionalisierungs-Komponente (N) zugesetzt und/oder mit umgesetzt wird.

Die Reaktionsstufen c) und d) können in beliebiger Weise und Abfolge kombiniert werden.

In Stufe b) kann zusätzlich eine Umesterung der Alkoxysilan-Gruppen der Perfluoralkyl-Komponente (A) mit einer alkoholischen Lösemittel-Komponente (K) durchgeführt werden.

Der freigesetzte Alkohol und/oder die Lösemittel-Komponente (K) kann in Stufe d) durch (azeotrope) Destillation entfernt werden und ggf. das dabei entzogene Wasser anschließend oder gleichzeitig wieder zugegeben werden.

Die Säure-Komponente (L) kann in der Stufe d) zusammen mit dem Wasser vorgelegt werden (indirekte Neutralisation).

Die fluorhaltigen Zusammensetzungen gemäß Reaktionsstufe a) liegen vorzugsweise in reiner Form vor, während die fluorhaltigen Zusammensetzungen gemäß Reaktionsstufe b) insbesondere in lösemittelhaltiger und die fluorhaltigen Zusammensetzungen gemäß Reaktionsstufe d) vorzugsweise in wässriger und ggf. lösemittelhaltiger Form vorliegen.

Die Reaktionsstufe a) wird insbesondere bei einer Temperatur von 40 bis 120 °C, vorzugsweise bei 50 bis 110 °C durchgeführt. Die Reaktionsstufe b) wird insbesondere bei einer Temperatur von 20 bis 60 °C, vorzugsweise bei 20 bis 30°C durchgeführt. Die Reaktionsstufen c) und d) werden insbesondere bei einer Temperatur von 30 bis 110 °C, vorzugsweise bei 40 bis 100°C durchgeführt. Die Reaktionsstufen c) und/oder d) werden insbesondere bei einem pH-Wert von 1 bis 7, vorzugsweise bei einem pH-Wert von 2 bis 6 und besonders bevorzugt bei einem pH-Wert von 3 bis 5 durchgeführt.

Das Equivalentverhältnis von Fluoratomen und Stickstoffatomen in den Umsetzungsprodukten der Stufen c) und d) wird insbesondere auf 1 : 50 bis 50 : 1, vorzugsweise 1 : 25 bis 25 : 1 und besonders bevorzugt auf 1 : 10 bis 10 : 1 eingestellt.

Das Equivalentverhältnis von Alkoxysilan-Gruppen und Wasser in Stufe c) wird insbesondere auf 1 : 10 bis 10 : 1, vorzugsweise 1 : 5 bis 5 : 1 eingestellt.

Das NCO/OH+NH₍₂₎-Equivalentverhältnis der Komponenten (B) und (C) und ggf. (N) in Reaktionsstufe a₁) wird vorzugsweise auf einen Wert von 0,95 bis 1,05 eingestellt.

Die Reaktionsstufe(n) a₁) kann in Gegenwart von 0,01 bis 1 Gew.-% bezogen auf die Umsetzungsprodukte eines für Polyadditionsreaktionen an Polyisocyanate üblichen Katalysators durchgeführt werden.

Der Festkörpergehalt der fluorhaltigen Zusammensetzung bestehend aus den Komponenten (B) und/oder (C) und/oder (F) und ggf. (N) in den Reaktionsstufen a) und b) wird insbesondere auf 10 bis 100 Gew.-%, vorzugsweise 100 Gew.-% eingestellt.

Der Festkörpergehalt der fluorhaltigen Zusammensetzung bestehend aus den Komponenten (B) und/oder (C) und/oder (F) und (L) und ggf. (N) in den Reaktionsstufen d) und e) wird insbesondere auf 10 bis 90 Gew.-%, vorzugsweise 20 Gew.-% eingestellt

Der pH-Wert der fluorhaltigen Zusammensetzung bestehend aus den Komponenten (B) und/oder (C) und/oder (F) und ggf. (K) und (L) und ggf. (M) und ggf. (N) in den Reaktionsstufen d) und e) wird insbesondere auf 1 bis 7, vorzugsweise 2 bis 6 eingestellt.

Die Viskosität (Brookfield) der fluorhaltigen Zusammensetzung bestehend aus den Komponenten (B) und/oder (C) und/oder (F) und ggf. (K) und (L) und ggf. (M) und ggf. (N) in den Reaktionsstufen d) und e) wird vorzugsweise auf 1 bis 10 000 mPa·s eingestellt.

Das in Stufe c) eingesetzte Wasser bewirkt eine Hydrolyse der in den Komponenten (A) und ggf. (E) enthaltenen hydrolysierbaren Alkoxysilan-Gruppen (RO-Si)zu SilanolGruppen (HO-Si), die unter Ausbildung von Siloxan-Gruppen (Si-O-Si) cokondensieren können. Das in Stufe d) eingesetzte Wasser bewirkt im Rahmen weiterer Kondensationsrekationen eine Oligomerisierung unter Bildung von oligomerisierten Organosiloxan-Cokondensaten. Üblicherweise wird die Wassermenge in Stufe c) zunächst so bemessen, dass eine kontrollierte Cokondensation erfolgt. Die in den Stufen c) und d) ablaufenden Reaktionen können durch geeignete Kombination von pH-Wert, Reaktionstemperatur und Reaktionszeit gesteuert werden, welche von einem Fachmann ohne Weiteres bestimmt werden können.

Die nach dem erfindungsgemäßen Verfahren hergestellten fluorhaltigen Zusammensetzungen sind stabile und in der Regel klare Lösungen. Die erfindungsgemäßen fluorhaltigen Zusammensetzungen lassen sich geeigneterweise mit Wasser und/oder Alkoholen in jedem Verhältnis verdünnen.

Ein weiterer Gegenstand der vorliegenden Erfindung betrifft die Verwendung der erfindungsgemäßen fluorhaltigen Zusammensetzungen im Bau- oder Industriebereich zur permanenten öl-, wasser- und schmutzabweisenden Oberflächenbehandlung bzw. -modifizierung von mineralischen und nichtmineralischen Untergründen, wie beispielsweise
- Anorganische Oberflächen,
   wie z. B. poröse, saugende, raue und polierte Baumaterialien und Bauwerkstoffe aller Art (wie z. B. Beton, Gips, Kieselsäure und Silikate, Kunststein, Naturstein (wie z. B. Granit, Marmor, Sandstein, Schiefer, Serpentin), Ton, Zement, Ziegel) sowie Emaille, Füllstoffe und Pigmente, Glas und Glasfasern, Keramik, Metalle und Metalllegierungen,
- Organische Oberflächen,
   wie z. B. Gewebe und Textilien, Holz und Holzwerkstoffe, Holzfurnier, glasfaserverstärkte Kunststoffe (GFK), Kunststoffe, Leder, Naturfasern, Polymere aller Art, Verbundmaterialien.

Die erfindungsgemäßen fluorhaltigen Zusammensetzungen eignen sich zudem zur permanenten öl-, wasser- und schmutzabweisenden Oberflächenbehandlung bzw. -modifizierung in den Anwendungsbereichen

Bau wie z. B.
- Antigraffiti Coatings
- Antisoiling Coatings
- Easy-To-Clean Coatings
- weitere Beschichtungen aller Art (wie z. B. Balkonbeschichtungen, Dach(ziegel) beschichtungen, Einbrennlacke, Farben und Lacke, Fassadenfarben, Bodenbeschichtungen, leicht-, mittel und hochbelastbare Industrieböden, Parkdeckbeschichtungen, Sportböden, Pulverbeschichtungen)
- Abdichtungen
- Bauten- und Fassadenschutz
- Betonfertigteile
- Betonformteile
- Fliese und Fuge
- Kleb-und Dichtstofie
- Kleb- und Dichtstoffe
- Lärmschutzwände
- Korrosionsschutz
- Putze und Dekorputze
- Wärmedämmverbundsysteme (WDVS) und Wärmedämmsysteme (WDS).
sowie
Nichtbau und Industrie wie z. B.
- Additive (wie z. B. Haftvermittler, Trennmittel, Vernetzer)
- Automobilindustrie
- Coil Coatings
- Einbrennlacke
- Farben- und Lacke
- Gewebe- und Textilbeschichtung
- Glasfassaden und Glasoberflächen
- Keramik und Sanitärkeramik
- Lederzurichtung
- oberflächenmodiflzierte Füllstoffe und Pigmente
- Papierbeschichtung
- Rotoren von Windkraftanlagen
- Schiffsfarben

Die erfindungsgemäßen fluorhaltigen Zusammensetzungen eignen sich zudem im Bau-oder Industriebereich zur Massen-hydrophobierung/-oleophobierung von Beton wie z. B.
- Betonfertigteile
- Betonformteile
- Ortbeton
- Spritzbeton
- Transportbeton

Die erfindungsgemäßen fluorhaltigen Zusammensetzungen enthalten aufgrund ihrer oligomeren Struktur bevorzugt eine hohe Konzentration an Silanol-Funktionen, die sie in hervorragender Weise zur Reaktion mit hydroxylgruppenhaltigen Substratoberflächen befähigt. Beschichtungen und Imprägnierungen mit diversen Substraten ergaben ausgezeichnete öl- und gleichzeitig wasserabweisende Eigenschaften - auch nach Temperatur-, Tensid- und UV-Behandlung. In entsprechenden Untersuchungen konnte zudem auf verschiedenen Substraten gezeigt werden, dass auch nach > 6 Monaten keine Verringerung der Wirksamkeit bzw. eine Destabilisierung der erfindungsgemäßen fluorhaltigen Zusammensetzungen erkennbar war. Bei der Anwendung der erfindungsgemäßen fluorhaltigen Zusammensetzungen kann man in einfacher und hervorragender Weise zugleich eine hydrophobierende, oleophobierende, schmutz- und farbabweisende Wirkung auf den unterschiedlichsten Substratoberflächen erzielen.

Die Applikation der erfindungsgemäßen fluorhaltigen Zusammensetzungen kann mit den aus der Lacktechnologie bekannten Methoden, wie z.B. Fluten, Gießen, Rakeln, Rollen, Spritzen, Streichen, Tauchen, Walzen erfolgen.

Die Trocknung und Aushärtung der aus den erfindungsgemäßen fluorhaltigen Zusammensetzungen hergestellten Beschichtungen erfolgt im Allgemeinen bei normalen (Außen- und Innen-)Temperaturen im Bereich von 0 bis 50 °C, d.h. ohne spezielles Erhitzen der Beschichtungen, kann jedoch je nach Anwendung auch bei höheren Temperaturen im Bereich von 50 bis 150 °C erfolgen.

Die nachfolgenden Beispiele dienen dazu, die Erfindung weiter zu veranschaulichen.

### Beispiele 1 bis 4

### Fluorhaltige Zusammensetzungen auf Basis der (Per)fluoralkyl-Komponente (A) aus Stufe a₁)

In einem 100 mL Dreihalsrundkolben mit Innenthermometer, Tropftrichter, Luftkühler und Rührmagnet wurden 25,00 g (0,069 mol, M = 364,11 g/mol) 3,3,4,4,5,5,6,6,7,7,8,8,8-Tridecafluorooctanol vorgelegt. Nach Zugabe eines Tropfens Dibutylzinndilaurat (DBTL) als Katalysator wurde das Gemisch auf 70 °C erhitzt. Bei dieser Temperatur wurden 16,98 g (0,069 mol, M = 247,37 g/mol) 3-(Triethoxysilyl) propylisocyanat über einen Zeitraum von 2 h zugetropft. Zur Vervollständigung der Reaktion wurde weitere 2 h bei Raumtemperatur nachgerührt.
Isocyanat-Gehalt: Berechnet 0 Gew.-%, Gefunden: 0,08 Gew.-%

### Verkieselung (siehe Tabelle 1) und Oligomerisierung:

In einem 100 mL Dreihalsrundkolben mit Innenthermometer, Tropftrichter und Rührmagnet wurde ein Gemisch des erhaltenen Fluorsilans und DYNASYLAN® AMEO ((3-Aminopropyl)triethoxysilan) vorgelegt. Die entsprechende Menge Wasser wurde über den Tropftrichter zugegeben. Das Reaktionsgemisch wurde anschließend für 3 h bei einer Temperatur von 60 °C erhitzt. Nach Abkühlen auf Raumtemperatur wurde Ameisensäure zugegeben (1,1 eq bezogen auf DYNASYLAN® AMEO, Temperaturerhöhung auf ca. 45 °C) und kurze Zeit nachgerührt. Es wurden in allen Fällen viskose, gelbliche, klare Flüssigkeiten erhalten.

Zur Oligomerisierung des Produktes wurden 5,00 g mit 45,00 g Wasser gemischt und für 1 h bei 100 °C erhitzt. In allen Fällen wurden opaleszierende, wässrige Lösungen erhalten.

**Tabelle 1: Beispiel 1 bis 4, Verkieselung**

| **Beispiel** | **F/N-Equivalent-Verhältnis** | **Fluorsilan** | **DYNASYLAN^{®} AMEO** | **Wasser** | **Ameisensäure (85 %)** |
|---|---|---|---|---|---|
| 1 | 5,2/1 | 8,00 g (0,0131 mol) | 7,25 g (0,0328 mol) | 0.83 g (0,0461 mol) | 1,96 g (0,0363 mol) |
| 2 | 6,5/1 | 8,00 g (0,0131 mol) | 5,79 g 5,79 g (0,0262 mol) | 0.71 g (0,0393 mol) | 1,56 g (0,0288 mol) |
| 3 | 9,1/1 | 8,00 g (0,0131 mol) | 4,14 g (0,0187 mol) | 0.57 g (0,0318 mo) | 1,11 g (0,0206 mol) |
| 4 | 13/1 | 8,00 g (0,0131 mol) | 2,90 g (0,0131 mol) | 0.47 g (0,0262 mol) | 0,78 g (0,0144 mol) |

### Beispiele 5 bis 8

### Fluorhaltige Zusammensetzungen auf Basis der (Per)fluoralkyl-Komponente (A) aus Stufe a₂)

In einem 250 mL Dreihalsrundkolben mit Innenthermometer, Tropftrichter und Rührmagnet wurde ein Gemisch aus 20,00 g (90,0 mmol,
M = 222,3 g/mol) Isophorondiisocyanat (3-(Isocyanatomethyl)-3,5,5-trimethylcyclohexylisocyanat, VESTANAT^{®} IPDI) und 15.00 g NMP vorgelegt und mit 0,09 g Dibutyltindilaurat als Katalysator versetzt. 41,77 g (0,090 mol, M = 464,11 g/mol) 3,3,4,4,5,5,6,6,7,7,8,8,9,9,10,10,10-Heptadecafluorodecanol wurden unter Erwärmen in 11,76 g NMP gelöst und bei einer Innentemperatur von 40 °C innerhalb von 90 min zugetropft. Zur Vervollständigung der Reaktion wurde kurz nachgerührt.
Isocyanat-Gehalt: Berechnet: 4,27 Gew.-%, Gefunden : 4,13 Gew.-%

In einem 250 mL Dreihalskolben mit Innenthermometer, Tropftrichter und Rührmagnet wurden 87,42 g des Vorproduktes in NMP (0,089 mol) vorgelegt. Innerhalb einer Stunde wurde ein Gemisch aus 17,82 g
(0,080 mol, M = 221,37 g/mol) DYNASYLAN^{®} AMEO
((3-Aminopropyl)triethoxysilan) und 15,96 g NMP so zugetropft, dass die Temperatur 40 °C nicht überschritt. Zur Vervollständigung der Reaktion wurden weitere 30 min bei dieser Temperatur nachgerührt. Als Produkt wurde eine klare, hellgelbe Flüssigkeit erhalten.
Isocyanat-Gehalt: 0 Gew.-%

### Verkieselung (siehe Tabelle 2) und Oligomerisierung:

In einem 100 mL Dreihalsrundkolben mit Innenthermometer, Tropftrichter und Rührmagnet wurde gemäß Tabelle 2 ein Gemisch des erhaltenen Fluorsilans und DYNASYLAN^{®} AMEO ((3-Aminopropyl)triethoxysilan) vorgelegt. Die entsprechende Menge Wasser wurde über den Tropftrichter zugegeben. Das Reaktionsgemisch wurde anschließend für 3 h bei einer Temperatur von 60 °C erhitzt. Nach Abkühlen auf Raumtemperatur wurde Ameisensäure zugegeben (1,56 eq bezogen auf DYNASYLAN^{®} AMEO, Temperaturerhöhung auf ca. 45 °C) und kurze Zeit nachgerührt. Es wurden in allen Fällen viskose, weiss-trübe Flüssigkeiten erhalten.

Zur Oligomerisierung des Produktes wurden 125,80 g mit 392,00 g Wasser gemischt und für 1 h bei 94 - 100 °C erhitzt. In allen Fällen wurden opaleszierende, wässrige Lösungen erhalten.

### Oberflächenenergien und Kontaktwinkel

Die Zusammensetzungen der Beispiele 5 bis 8 weisen Oberflächenenergien von 8 bis 12 mN/m und Kontaktwinkel θ (Wasser) von 95 bis 125° auf.

**Tabelle 2: Beispiele 5 bis 8, Verkieselung**

| **Beispiel** | **F/N-Equivalent-Verhältnis** | **Fluorsilan-NMP-Gemisch** | **DYNASYLAN^{®} AMEO** | **Wasser** | **Ameisensäure (85 %)** |
|---|---|---|---|---|---|
| 5 | 5/1 | 20,00 g (0,0142 mol) | 10,75 g (0,0486 mol) | 1,13 g (0,0627 mol) | 4,10 (0,0757 mol) |
| 6 | 6,6/1 | 20,00 g (0,0142 mol) | 8,15 g (0,0368 mol) | 0,92 g (0,0511 mol) | 3,11 g (0,0574 mol) |
| 7 | 9/1 | 20,00 g (0,0142 mol) | 5,96 g (0,0269 mol) | 0,74 g (0,0411 mol) | 2,27 g (0,0419 mol) |
| 8 | 13/1 | 20,00 g (0,0142 mol) | 4,12 g (0,0186 mol) | 0,59 g (0,0327 mol) | 1,58 g (0,0292 mol) |

### Beispiel 9

### Oberflächenbehandlung von mineralischen Oberflächen mit den fluorhaltigen Zusammensetzungen aus den Beispielen 1 bis 8

Ziegel-, Kalksand- und Betonsteine wurden in Quader mit einer Kantenlänge von ca. 5 cm geschnitten und ca. 5 Minuten in die fluorhaltigen Zusammensetzungen aus den Beispielen 1 bis 8 (mit Wasser auf 1 Gew.-% bezogen auf das Festharz verdünnt) getaucht. Nach Trocknung der Steine bei Raumtemperatur oder im Trockenschrank bei ca. 120 °C drangen auf die Oberfläche der Steine aufgetragenes Wasser sowie auch Öl (Mineralöl, Thermoöl Marlotherm S = Tritoluol oder auch Siliconöl) nicht mehr in die Oberfläche der Baustoffe ein. Der Abperleffekt für die genannten Flüssigkeiten war sehr gut. Bei unbehandelten Proben drangen die genannten Flüssigkeiten sofort in die Oberfläche ein. Die fluorhaltigen Zusammensetzungen eignen sich damit zur gleichzeitigen Hydro- und Oleophobierung von mineralischen Baustoffen.

### Beispiel 10

### Oberflächenbehandlung von mineralischen Fassadenelementen mit den fluorhaltigen Zusammensetzungen aus den Beispielen 1 bis 8

Polierter Granit, Marmor, Sandstein, Kunststein und keramische Fliesen wurden mit der fluorhaltigen Zusammensetzungen aus den Beispielen 1 bis 8 (mit Wasser auf 1 Gew.-% bezogen auf das Festharz verdünnt) besprüht. Auf der Oberfläche gebildete Tröpfchen wurden mit einem Gummiwischer entfernt. Nach Trocknung der Oberflächen zeigte sich im Vergleich zu unbehandelten Oberflächen ein deutlicher Abperleffekt bezüglich aufgetragener Öl- und Wassertropfen, Öl und Wasser drangen in die porösen Substrate nicht mehr ein. Die Oberflächen ließen sich nach der Verschmutzung leichter reinigen. Die fluorhaltigen Zusammensetzungen eignen sich damit zur Antigraffiti-, Antisoiling-, Easy-To-Clean-Ausrüstung von Fassaden, Wänden, Fußböden und dergleichen.

### Beispiel 11

### Oberflächenbehandlung von Glas mit den fluorhaltigen Zusammensetzungen aus den Beispielen 1 bis 8

Glasscheiben mit einer Kantenlänge von ca. 10x20 cm wurden ca. 5 Minuten in die fluorhaltigen Zusammensetzungen aus den Beispielen 1 bis 8 (mit Wasser auf 1 Gew.-% bezogen auf das Festharz verdünnt) getaucht. Nach Abtropfen und Trocknung der Glasscheiben bei Raumtemperatur oder im Trockenschrank bei ca. 120 °C perlt auf die Oberfläche der Glasscheiben aufgetragenes Wasser sowie auch Öl (Mineralöl, Thermoöl Marlotherm S = Tritoluol oder auch Siliconöl) deutlich ab. Der Randwinkel für die genannten Flüssigkeiten war > 90 °. Bei unbehandelten Proben war der Randwinkel deutlich < 90 °. Die fluorhaltigen Zusammensetzungen hinterließen auf der Glasscheibe einen Film und eignen sich damit zur gleichzeitigen Hydro- und Oleophobierung von Glas.

### Beispiel 12

### Oberflächenbehandlung von Metalloberflächen mit den fluorhaltigen Zusammensetzungen aus den Beispielen 1 bis 8

Ca.1 mm starke, sandgestrahlte Stahlplatten sowie Al-Flolie mit einer Kantenlänge von ca. 10x20 cm wurden ca. 5 Minuten in die fluorhaltigen Zusammensetzungen aus den Beispielen 1 bis 8 (mit Wasser auf 1 Gew.-% bezogen auf das Festharz verdünnt) getaucht. Nach Abtropfen und Trocknung der Stahlstücke bei Raumtemperatur oder im Trockenschrank bei ca. 120 °C perlte auf die Oberfläche der Stahlstücke aufgetragenes Wasser sowie auch Öl (Mineralöl, Thermoöl Marlotherm S = Tritoluol oder auch Siliconöl) deutlich ab. Die visuell beurteilten Randwinkel waren bei den behandelten Metallproben deutlich höher als bei nicht behandelten. Das Produkt erzeugte einen Film auf der Metalloberfläche. Die fluorhaltigen Zusammensetzungen erzeugten einen Film auf der Metalloberfläche und eignen sich damit zur gleichzeitigen Hydro- und Oleophobierung von Metalloberflächen. Lagerung beschichteter und unbeschichteter Stahlplatten in wässriger HCl-Lösung zeigte eine deutlich geringere Korrosion bei den mit den fluorhaltigen Zusammensetzungen beschichteten Stahlplatten.

### Beispiel 13

### Oberflächenbehandlung von Holz mit den fluorhaltigen Zusammensetzungen aus den Beispielen 1 bis 8

Eine ca. 0,5 cm starke Holzplatte wurde in Rechtecke mit einer Kantenlänge von ca. 3 x 5 cm geschnitten und ca. 5 Minuten in die fluorhaltigen Zusammensetzungen aus den Beispielen 1 bis 8 (mit Wasser auf 1 Gew.-% bezogen auf das Festharz verdünnt) getaucht. Nach Trocknung der Holzstücke bei Raumtemperatur oder im Trockenschrank bei ca. 120 °C drang auf die Oberfläche der Holzstücke aufgetragenes Wasser sowie auch Öl (Mineralöl, Thermoöl Marlotherm S = Tritoluol oder auch Siliconöl) nicht mehr in die Oberfläche der Holzstücke ein. Der Abperleffekt für die genannten Flüssigkeiten war sehr gut. Bei unbehandelten Proben drangen die genannten Flüssigkeiten sofort in die Oberfläche ein. Die fluorhaltigen Zusammensetzungen eignen sich damit zur gleichzeitigen Hydro- und Oleophobierung von Holz.

### Beispiel 14

### Oberflächenbehandlung von Kunststoffoberflächen mit den fluorhaltigen Zusammensetzungen aus den Beispielen 1 bis 8

Ca. 1 mm starke MMA-Kunststoffplatten wurden ca. 5 Minuten in die fluorhaltigen Zusammensetzungen aus den Beispielen 1 bis 8 (mit Wasser auf 1 Gew.-% bezogen auf das Festharz verdünnt) getaucht. Nach Abtropfen und Trocknung der Kunststoffplättchen bei Raumtemperatur oder im Trockenschrank bei ca. 90 °C perlte auf die Oberfläche der Kunststoffstücke aufgetragenes Wasser sowie auch Öl (Mineralöl, Thermoöl Marlotherm S = Tritoluol oder auch Siliconöl) deutlich ab. Der Abperleffekt für die genannten Flüssigkeiten war sehr gut. Die visuell beurteilten Randwinkel waren bei den behandelten Metallproben deutlich höher als bei nicht behandelten. Die fluorhaltigen Zusammensetzungen eignen sich damit zur gleichzeitigen Hydro- und Oleophobierung von Kunststoffoberflächen.

### Beispiel 15

### Oberflächenbehandlung von Leder mit den fluorhaltigen Zusammensetzungen aus den Beispielen 1 bis 8

Saugfähiges Leder (Fensterleder) wurde ca. 5 Minuten in die fluorhaltigen Zusammensetzungen aus den Beispielen 1 bis 8 (mit Wasser auf 1 Gew.-% bezogen auf das Festharz verdünnt) getaucht. Nach Trocknung der Lederstücke bei Raumtemperatur oder im Trockenschrank bei ca. 120 °C drang auf die Oberfläche der Lederstücke aufgetragenes Wasser sowie auch Öl (Mineralöl, Thermoöl Marlotherm S = Tritoluol oder auch Siliconöl) nicht mehr in die Oberfläche der Lederstücke ein. Der Abperleffekt für die genannten Flüssigkeiten war sehr gut. Bei unbehandelten Proben drangen die genannten Flüssigkeiten sofort in die Oberfläche ein. Die fluorhaltigen Zusammensetzungen eignen sich damit zur gleichzeitigen Hydro- und Oleophobierung von Leder.

### Beispiel 16

### Oberflächenbehandlung von Baumwolle mit den fluorhaltigen Zusammensetzungen aus den Beispielen 1 bis 8

Baumwolle wurde in Quadrate mit einer Kantenlänge von ca. 5 cm geschnitten und ca. 5 Minuten in die fluorhaltigen Zusammensetzungen aus den Beispielen 1 bis 8 (mit Wasser auf 1 Gew.-% bezogen auf das Festharz verdünnt) getaucht. Nach Trocknung der Stoffstücke bei Raumtemperatur oder im Trockenschrank bei ca. 120 °C drang auf die Oberfläche der Stoffstücke aufgetragenes Wasser sowie auch Öl (Mineralöl, Thermoöl Marlotherm S = Tritoluol oder auch Siliconöl) nicht mehr in die Oberfläche der Stoffstücke ein. Der Abperleffekt für die genannten Flüssigkeiten war sehr gut. Bei unbehandelten Proben drangen die genannten Flüssigkeiten sofort in die Oberfläche ein. Die fluorhaltigen Zusammensetzungen eignen sich damit zur gleichzeitigen Hydro- und Oleophobierung von Baumwolle.

### Beispiel 17

### Oberflächenbehandlung von Papier mit den fluorhaltigen Zusammensetzungen aus den Beispielen 1 bis 8

Papiertaschentücher wurden in Stücke mit einer Kantenlänge von ca. 5 cm geschnitten und ca. 5 Minuten in die fluorhaltigen Zusammensetzungen aus den Beispielen 1 bis 8 (mit Wasser auf 1 Gew.-% bezogen auf das Festharz verdünnt) getaucht. Nach Trocknung der Papierstücke bei Raumtemperatur oder im Trockenschrank bei ca. 120 ° C drang auf die Oberfläche der Papierstücke aufgetragenes Wasser sowie auch Öl (Mineralöl, Thermoöl Marlotherm S = Tritoluol oder auch Siliconöl) nicht mehr in die Oberfläche der Papierstücke ein. Der Abperleffekt für die genannten Flüssigkeiten war sehr gut. Bei unbehandelten Proben drangen die genannten Flüssigkeiten sofort in die Oberfläche ein. Die fluorhaltigen Zusammensetzungen eignen sich damit zur gleichzeitigen Hydro- und Oleophobierung von Papier.

### Beispiel 18

### Oberflächenbehandlung von Autolackoberflächen mit den fluorhaltigen Zusammensetzungen aus den Beispielen 1 bis 8

Autolackoberflächen wurden mit den fluorhaltigen Zusammensetzungen aus den Beispielen 1 bis 8 (mit Wasser auf 1 Gew.-% bezogen auf das Festharz verdünnt) besprüht. Nach ca. 15 Minuten zeigte sich auf der Lackoberfläche ein dauerhafter Wasser-Abperleffekt. Verschmutzungen ließen sich leichter entfernen als von unbehandelten Lackoberflächen. Die Beschichtung war dauerhaft und Überstand einen Fahrzeugbetrieb von mehr als einem halben Jahr, ohne dass eine Nachbehandlung erforderlich wurde. Die fluorhaltigen Zusammensetzungen eignen sich daher zur Antigraffiti-, Antisoiling-, Easy-To-Clean-Ausrüstung lackierter Oberflächen, z. B. von PKWs, LKWs, Eisenbahnwaggons, Maschinen, Fassaden und dergleichen im Innen-und im Außeneinsatz.

## Patentansprüche

1. Flüssige fluorhaltige Zusammensetzungen mit einem auf das Festharz bezogenen Fluorgehalt von 5 bis 75 Gew.-% für die permanente Oberflächenbehandlung poröser und nicht poröser Substrate, dadurch erhältlich, dass man zunächst
a) eine Perfluoralkyl-Komponente (A) dadurch herstellt, dass man
a₁) 5 bis 95 Gew.% einer (Per)fluoroalkylalkohol-Komponente (B)(i) umfassend Perfluoralkylalkohole mit terminalen Methylen-Gruppen (Kohlenwasserstoff-Spacem) der allgemeinen Formel
CF₃-(CF₂)ₓ-(CH₂)_{y}-OH,
mit x = 3 - 20 und y = 1 - 6
und/oder
Hexafluorpropenoxid (HFPO)-Oligorner-Alkohole der allgemeinen Formel
CF₃CF₂CF₂O-(CF(CF₃)CF₂O)₂-CF(CF₃)CH₂-OH,
mit z = 1 - 10
und/oder
einer (Per)fluoroalkylalkylenamin-Komponente (B)(ii),
und/oder
fluormodifizierte Makromonomere oder Telechele (B)(iii) mit einem polymer gebundenem Fluorgehalt von 1 bis 99 Gew.-% und einer Molekularmasse von 100 bis 10 000 g/mol (Dalton), enthaltend die in der Hauptkette und/oder Seitenkette intrachenal und/oder lateral und/oder terminal angeordneten Strukturelemente
-(CF₂CF₂)ₙ- mit n ≥ 3
und/oder
-(CF₂CFRO)ₙ- mit n ≥ 3 und R = F, CF₃
mit jeweils einer oder mehreren reaktiven aliphatischen und/oder aromatischen Hydroxyl-Gruppe(n) und/oder primären und/oder sekundären Amino-Gruppe(n) und/oder Mercapto-Gruppe(n),
mit
95 bis 5 Gew.% einer Komponente (C)(i), bestehend aus einem 3-Isocyanatopropyltrialkoxysilan und/oder einem 3-Isocyanatopropylalkoxyalkylsilan und/oder Isocyanatoalkylalkoxysilanen der allgemeinen Formel
OCN-(CH₂)₃-Si(OR¹)₃₋ₓR²ₓ,
mit x = 0, 1, 2
R¹, R² = Alkyl mit 1 - 25 C-Atomen,
und/oder einer anderen Isocyanatosilan-Komponente (C)(ii) einer Molekularmasse von 200 bis 2000 g/mol (Dalton) mit einer oder mehreren (cyclo)aliphatischen und/oder aromatischen Isocyanato-Gruppe(n) und einer oder mehreren Alkoxysilan-Gruppe(n) der fluorhaltigen Zusammensetzungen umsetzt
oder
mit 95 bis 5 Gew.% einer Epoxyalkylolalkoxysilan-Komponente (F) (i), bestehend aus einem (substituiertem) 3-Glycidyloxypropyltrialkoxysilan der allgemeinen Formel
CH₂OCH-CH₂O-(CH₂)₃-Si(OR¹)₃₋ₓR²ₓ,
mit x = 0, 1, 2
R¹, R² = Alkyl mit 1 - 25 C-Atomen,
und/oder einer anderen Epoxysilan-Komponente (F)(ii) einer Molekularmasse von 200 bis 2000 g/mol (Dalton) mit einer oder mehreren Epoxid-Gruppe(n) und einer oder mehreren Alkoxysilan-Gruppe(n) umsetzt,
anschließend
b) 5 bis 100 Gewichtsteile der Perfluoralkyl-Komponente (A) aus der Stufe a) vor, während oder nach der Umsetzung in 0 bis 100 Gewichtsteilen einer Lösemittel-Komponente (K) löst,
d₁) das Umsetzungsprodukt aus der Stufe b) anschließend oder gleichzeitig in 50 bis 1000 Gewichtsteilen Wasser auflöst und oligomerisiert.

2. Fluorhaltige Zusammensetzungen nach Anspruch 1,
**dadurch gekennzeichnet,**
**dass** als Komponente (C)(i) 1-Isocyanatopropyltrimethoxysilan und/oder 3-Isocyanatopropyltriethoxysilan eingesetzt wird.

3. Fluorhaltige Zusammensetzungen der Ansprüche 1 oder 2,
**dadurch gekennzeichnet,**
**dass** als Komponente (E)(i) 3-Aminopropyltrimethoxysilan und/oder 3-Aminopropyltriethoxysilan und/oder N-(2-Aminoethyl)-3-aminopropyltrimethoxysilan und/oder N-(2-Aminoethyl)-3-aminopropyltriethoxysilan eingesetzt wird.

4. Fluorhaltige Zusammensetzungen nach einem nach einem der Ansprüche 1 bis 3,
**dadurch gekennzeichnet,**
**dass** als Komponente (F)(i) 3-Glycidyloxypropyltrimethoxysilan und/oder 3-Glycidyloxypropyltriethoxysilan eingesetzt wird.

5. Fluorhaltige Zusammensetzungen nach einem der Ansprüche 1 bis 4,
**dadurch gekennzeichnet,**
**dass** als Lösemittel-Komponente (K) Methanol, Ethanol, Propanol, Isopropanol, n-Butanol, Isobutanol, tert.Butanol, Aceton, Methylethylketon, N-Methylpyrrolidon, Dipropylenglykoldimethylether, cyclische Propylencarbonate oder Kombination daraus eingesetzt werden.

6. Fluorhaltige Zusammensetzungen nach einem der Ansprüche 1 bis 5
**dadurch gekennzeichnet,**
**dass** als Komponente (L) Ameisensäure und/oder Essigsäure und/oder Kohlendioxid eingesetzt wird.

7. Fluorhaltige Zusammensetzungen nach einem der Ansprüche 1 bis6,
**dadurch gekennzeichnet,**
**dass** als Komponente (M) (funktionalisierte) anorganische und/oder organische Füllstoffe, Leichtfüllstoffe, Pigmente und Trägermaterialien, anorganische und/oder organische Nanomaterialien, anorganische und/oder organische Fasern, weitere Polymere und/oder Polymerdispersionen und/oder redispergierbare Polymer-Pulver aller Art,
Entschäumer, Entlüfter, Gleit- und Verlaufadditive, Substratnetzadditive, Netz- und Dispergieradditive, Hydrophobierungsmittel, Rheologieadditive, Koaleszenzhilfsmittel, Mattierungsmittel, Haftvermittler, Frostschutzmittel, Antioxidantien, UV-Stabilisatoren, Bakterizide, Fungizide, Wasser, Lösemittel und Katalysatoren aller Art sowie geeignete Kombination daraus eingesetzt eingesetzt werden.

8. Fluorhaltige Zusammensetzungen nach einem der Ansprüche 1 bis 7,
**dadurch gekennzeichnet,**
**dass** die Komponente (M) in beschichteter und/oder mikroverkapselter und/oder trägerfixierter und/oder hydrophilierter und/oder lösemittelhaltiger Form vorliegt.

9. Fluorhaltige Zusammensetzungen nach einem der Ansprüche 1 bis 8,
**dadurch gekennzeichnet,**
**dass** als Funktionalisierungs-Komponente (N) niedermolekulare Polyole und/oder Polyamine einer Molekularmasse von 32 bis 499 g/mol (Dalton) und/oder höhermolekulare (polymerere) Polyole und/oder Polyamine einer Molekularmasse von 500 bis 10 000 g/mol (Dalton) und/oder anionisch und/oder kationisch modifizierbare (polymere) Polyole und/oder Polyamine einer Molekularmasse von 118 bis 5000 g/mol (Dalton) und/oder (polymere) Verbindungen einer Molekularmasse 250 bis 10000 g/mol (Dalton) mit mindestens einer Alkoxysilan-Gruppe und ggf. einer oder mehreren Amino-und/oder Hydroxyl- und/oder Mercapto- und/oder Isocyanato- und/oder Epoxy-Gruppe(n) eingesetzt werden, wobei diese Verbindungen nicht ausgewählt sind aus den Komponenten (C), (E), (F), (G) und (I), wobei (G) eine (Per)fluoroalkylenoxid-Komponente der allgemeinen Formel CF₃-(CF₂)ₓ-(CF₂)_{y}-CHOCH₂ mit x = 3 bis 20 und y = 1 bis 6 ist, und wobei (I) eine Methacryloyloxyalkylalkoxysilan-Komponente (I)(i) der allgemeinen Formel
CH₂=C(CH₃)-CO₂-(CH₂)₃-Si(OR¹)₃₋ₓR²ₓ,
mit x = 0, 1, 2
R¹, R² = Alkyl mit 1 - 25 C-Atomen,
und/oder eine andere Methacryloylsilan-Komponente (I)(ii) mit einer Molekularmasse von 200 bis 2 000 Dalton ist.

10. Fluorhaltige Zusammensetzungen nach einem der Ansprüche 1 bis 9,
**dadurch gekennzeichnet,**
**dass** als Funktionalisierungs-Komponente (N) Dimethylolpropionsäure und/oder Hydroxypivalinsäure und/oder 2(3)-Hydroxypropionsäure eingesetzt wird.

11. Fluorhaltige Zusammensetzungen nach einem der Ansprüche 1 bis 10,
**dadurch gekennzeichnet,**
**dass** diese einen Fluorgehalt von 5 bis 75 Gew.-% bezogen auf das Festharz aus den Komponenten (B) und/oder (C) und/oder (E) und/oder (F) und/oder (L) und ggf. (N) aufweisen und die lateralen und/oder terminalen angeordneten Strukturelemente
-(CF₂CF₂)ₙ- mit n ≥ 3
und/oder
-(CF₂CFRO)ₙ- mit n ≥ 3 und R = F, CF₃
sowie
-NR⁴₂H⁺R⁵CO₂⁻
und/oder
-NR⁴₂H⁺ HCO₃⁻ in Kombination mit -CO₂H mit R⁴, R⁵ = H, beliebiger anorganischer und/oder organischer und ggf. polymerer Rest mit 1 bis 100 C-Atomen und 0 bis 100 N- und/oder 0 bis 100 O- und/oder 0 bis 1000 F- und/oder 0 bis 100 Si-Atomen
beinhalten.

12. Verfahren zur Herstellung von fluorhaltigen Zusammensetzungen nach den Ansprüchen 1 bis 11, **dadurch gekennzeichnet, dass** man
a) eine Perfluoralkyl-Komponente (A) durch Umsetzung
der Komponenten (B)(i) und/oder (B)(ii) sowie ggf. (B)(iii) mit den Komponenten
(C)(i) und/oder (C)(ii) bzw.
(F)(i) und/oder (F)(ii)
herstellt,
b) die Perfluoralkyl-Komponente (A) aus der Stufe a) vor, während, oder nach der Umsetzung ggf. in der Lösemittel-Komponente (K) löst,
c₁) die Perfluoralkyl-Komponente (A) aus den Stufen a) oder b) ggf. in Gegenwart einer weiteren Aminoalkylalkoxysilan-Komponente(E)(i) und/oder einer Aminosilan-Komponente (E)(ii) mit Wasser (partiell) hydrolysiert bzw. silanolisiert,
c₂) das aminofunktionelle Addukt mit einer Säure-Komponente (L) quaterniert (direkte Neutralisation),
c₃) ggf. den freigesetzten Alkohol und/oder die Lösemittel-Komponente (K) entfernt,
d₁) das Umsetzungsprodukt aus der Stufe c) anschließend oder gleichzeitig in Wasser auflöst und oligomerisiert,
d₂) ggf. den freigesetzten Alkohol und/oder die Lösemittel-Komponente (K) entfernt,
e) ggf. während oder nach den Stufen a) und/oder b) und/oder c) und/oder d) in beliebiger Weise eine Formulierungs-Komponente (M) zugesetzt und/oder eine Funktionalisierungs-Komponente (N) zusetzt und/oder mit umsetzt.

13. Verfahren nach Anspruch 12,
**dadurch gekennzeichnet,**
**dass** man die Reaktionsstufen c) und d) in beliebiger Weise und Abfolge kombiniert.

14. Verfahren nach einem der Ansprüche 12 bis 13,
**dadurch gekennzeichnet,**
**dass** man in Stufe b) zusätzlich eine Umesterung der Alkoxysilan-Gruppen der Perfluoralkyl-Komponente (A) mit einer alkoholischen Lösemittel-Komponente (K) durchführt.

15. Verfahren nach einem der Ansprüche 12 bis 14,
**dadurch gekennzeichnet,**
**dass** man den freigesetzten Alkohol und/oder die Lösemittel-Komponente (K) in Stufe d) durch (azeotrope) Destillation entfernt und ggf. das dabei entzogene Wasser anschließend oder gleichzeitig wieder zugibt.

16. Verfahren nach einem der Ansprüche 12 bis 15,
**dadurch gekennzeichnet,**
**dass** man die Säure-Komponente (L) in der Stufe d) zusammen mit dem Wasser vorlegt (indirekte Neutralisation).

17. Verfahren nach einem der Ansprüche 12 bis 16,
**dadurch gekennzeichnet,**
**dass** die fluorhaltigen Zusammensetzungen gemäß Reaktionsstufe a) in reiner Form vorliegen.

18. Verfahren nach einem der Ansprüche 12 bis 16,
**dadurch gekennzeichnet,**
**dass** die fluorhaltigen Zusammensetzungen gemäß Reaktionsstufe b) in lösemittelhaltiger Form vorliegen.

19. Verfahren nach einem der Ansprüche 12 bis 16,
**dadurch gekennzeichnet,**
**dass** die fluorhaltigen Zusammensetzungen gemäß Reaktionsstufe d) in wässriger und ggf. lösemittelhaltiger Form vorliegen.

20. Verfahren nach einem der Ansprüche 12 bis 19,
**dadurch gekennzeichnet,**
**dass** man die Reaktionsstufe a) bei einer Temperatur von 40 bis 120 °C, vorzugsweise bei 50 bis 110 °C durchführt.

21. Verfahren nach einem der Ansprüche 12 bis 20,
**dadurch gekennzeichnet,**
**dass** man die Reaktionsstufe b) bei einer Temperatur von 20 bis 60 °C, vorzugsweise bei 20 bis 30°C durchführt.

22. Verfahren nach einem der Ansprüche 12 bis 21,
**dadurch gekennzeichnet,**
**dass** man die Reaktionsstufen c) und d) bei einer Temperatur von 30 bis 110 °C, vorzugsweise bei 40 bis 100°C durchführt.

23. Verfahren nach einem der Ansprüche 12 bis 22,
**dadurch gekennzeichnet,**
**dass** man die Reaktionsstufen c) und/oder d) bei einem pH-Wert von 1 bis 7, vorzugsweise bei einem pH-Wert von 2 bis 6 und besonders bevorzugt bei einem pH-Wert von 3 bis 5 durchführt.

24. Verfahren nach einem der Ansprüche 12 bis 23,
**dadurch gekennzeichnet,**
**dass** man das Equivalentverhältnis von Fluoratomen und Stickstoffatomen in den Umsetzungsprodukten der Stufen c) und d) auf 1 : 50 bis 50 : 1, vorzugsweise 1 : 25 bis 25 : 1 und besonders bevorzugt auf 1 : 10 bis 10 : 1 einstellt.

25. Verfahren nach einem der Ansprüche 12 bis 24,
**dadurch gekennzeichnet,**
**dass** man das Equivalentverhältnis von Alkoxysilan-Gruppen und Wasser in Stufe c) auf 1 : 10 bis 10 : 1, vorzugsweise 1 : 5 bis 5 : 1 einstellt.

26. Verfahren nach einem der Ansprüche 12 bis 25,
**dadurch gekennzeichnet,**
**dass** man das NCO/OH+NH₍₂₎-Equivalentverhältnis der Komponenten (B) und (C) und ggf. (N) in Reaktionsstufe a) mit der Komponente (C) (i) und/oder (C) (ii) auf einen Wert von 0,95 bis 1,05 einstellt.

27. Verfahren nach einem der Ansprüche 12 bis 26,
**dadurch gekennzeichnet,**
**dass** man die Reaktionsstufe a) mit der Komponente (C) (i) und/oder (C) (ii) in Gegenwart von 0,01 bis 1 Gew.-% bezogen auf die Umsetzungsprodukte eines für Polyadditionsreaktionen an Polyisocyanate üblichen Katalysators durchführt.

28. Verfahren nach einem der Ansprüche 12 bis 27,
**dadurch gekennzeichnet,**
**dass** man die Reaktionsstufe a) mit der Komponente (F) (i) und/oder (F) (ii) in Gegenwart von 0,01 bis 1 Gew.-% bezogen auf die Umsetzungsprodukte eines Katalysators durchführt.

29. Verfahren nach einem der Ansprüche 12 bis 28,
**dadurch gekennzeichnet,**
**dass** der Festkörpergehalt der fluorhaltigen Zusammensetzung bestehend aus den Komponenten (B) und/oder (C) und/oder (F) und ggf. (N) in den Reaktionsstufen a) und b) auf 10 bis 100 Gew.-%, vorzugsweise 100 Gew.-% eingestellt wird.

30. Verfahren nach einem der Ansprüche 12 bis 29,
**dadurch gekennzeichnet,**
**dass** der Festkörpergehalt der fluorhaltigen Zusammensetzung bestehend aus den Komponenten (B) und/oder (C) und/oder (E) und/oder (F) und (L) und ggf. (N) in den Reaktionsstufen d) und e) auf 10 bis 90 Gew.-%, vorzugsweise 20 Gew.% eingestellt wird.

31. Verfahren nach einem der Ansprüche 12 bis 30,
**dadurch gekennzeichnet,**
**dass** der pH-Wert der fluorhaltigen Zusammensetzung bestehend aus den Komponenten (B) und/oder (C) und/oder (E) und/oder (F) und ggf. (K) und (L) und ggf. (M) und ggf. (N) in den Reaktionsstufen d) und e) auf 1 bis 7, vorzugsweise 2 bis 6 eingestellt wird.

32. Verfahren nach einem der Ansprüche 12 bis 31
**dadurch gekennzeichnet,**
**dass** die Viskosität (Brookfield) der fluorhaltigen Zusammensetzung bestehend aus den Komponenten (B) und/oder (C) und/oder (E) und/oder (F) und ggf. (K) und (L) und ggf. (M) und ggf. (N) in den Reaktionsstufen d) und e) auf 1 bis 10 000 mPa·s eingestellt wird.

33. Verwendung der fluorhaltigen Zusammensetzungen nach den Ansprüchen 1 bis 11 im Bau- oder Industriebereich zur permanenten öl-, wasser- und schmutzabweisenden Oberflächenbehandlung bzw. -modifizierung von mineralischen und nichtmineralischen Untergründen, wie
• Anorganische Oberflächen,
wie z. B. poröse, saugende, raue und polierte Baumaterialien und Bauwerkstoffe aller Art (wie z. B. Beton, Gips, Kieselsäure und Silikate, Kunststein, Naturstein (wie z. B. Granit, Marmor, Sandstein, Schiefer, Serpentin), Ton, Zement, Ziegel) sowie Emaille, Füllstoffe und Pigmente, Glas und Glasfasern, Keramik, Metalle und Metalllegierungen,
• Organische Oberflächen,
wie z. B. Gewebe und Textilien, Holz und Holzwerkstoffe, Holzfurnier, glasfaserverstärkte Kunststoffe (GFK), Kunststoffe, Leder, Naturfasern, Polymere aller Art, Verbundmaterialien.

34. Verwendung der der fluorhaltigen Zusammensetzungen nach den Ansprüchen 1 bis 11 zur permanenten öl-, wasser- und schmutzabweisenden Oberflächenbehandlung bzw. -modifizierung im Bereich Bau wie z. B.
• Antigraffiti Coatings
• Antisoiling Coatings
• Easy-To-Clean Coatings
• weitere Beschichtungen aller Art (wie z. B. Balkonbeschichtungen, Dach(ziegel)beschichtungen, Einbrennlacke, Farben und Lacke, Fassadenfarben, Bodenbeschichtungen, leicht-, mittel- und hochbelastbare Industrieböden, Parkdeckbeschichtungen, Sportböden, Pulverbeschichtungen)
• Abdichtungen
• Betonfertigteile
• Betonformteile
• Fliese und Fuge
• Kleb- und Dichtstoffe
• Lärmschutzwände
• Korrosionsschutz
• Putze und Dekorputze
• Wärmedämmverbundsysteme (WDVS) und Wärmedämmsysteme (WDS).

35. Verwendung der fluorhaltigen Zusammensetzungen nach den Ansprüchen 1 bis 11 zur permanenten öl-, wasser- und schmutzabweisenden Oberflächenbehandlung bzw. -modifizierung im Bereich Nichtbau und Industrie, wie z. B.
• Additive (z. B. Haftvermittler, Trennmittel, Vernetzer)
• Automobilindustrie
• Coil Coatings
• Einbrennlacke
• Farben- und Lacke
• Gewebe- und Textilbeschichtung
• Glasfassaden und Glasoberflächen
• Keramik und Sanitärkeramik
• Lederzurichtung
• oberflächenmodifizierte Füllstoffe und Pigmente
• Papierbeschichtung
• Rotoren von Windkraftanlagen
• Schiffsfarben.

36. Verwendung der fluorhaltigen Zusammensetzungen nach den Ansprüchen 1 bis 11 im Bau- oder Industriebereich zur Massenhydrophobierungloleophobierung von Beton, wie z. B.
• Betonfertigteile
• Betonformteile
• Ortbeton
• Spritzbeton
• Transportbeton

37. Fluorhaltige Zusammensetzungen nach einem der Ansprüche 1 bis 11,
**dadurch gekennzeichnet**,
c₁) dass man die Perfluoralkyl-Komponente (A) aus den Stufen a) oder b) in Gegenwart von 0 bis 50 Gewichtsteilen einer Aminoalkylalkoxysilan-Komponente (E)(i) und/oder Aminosilan-Komponente (E)(ii) mit 1 bis 50 Gewichtsteilen Wasser (partiell) hydrolysiert bzw. silanolisiert,
c₂) das Aminofunktionelle Addukt mit 1 bis 50 Gewichtsteilen einer Säure Komponente (L) quaterniert (direkte Neutralisation)

38. Fluorhaltige Zusammensetzungen nach einem der Ansprüche 1 bis 11 oder 37,
**dadurch gekennzeichnet,**
**dass** man den in Schritt c₂) freigesetzten Alkohol und/oder die Lösemittel-Komponente (K) entfernt.

39. Fluorhaltige Zusammensetzungen nach einem der Ansprüche 1 bis 11 oder 37 oder 38,
**dadurch gekennzeichnet,**
**dass** man den in Schritt d₁) freigesetzten Alkohol und/oder die Lösemittel-Komponente (K) entfernt.

40. Fluorhaltige Zusammensetzungen nach einem der Ansprüche 1 bis 11 oder 37 bis 39,
**dadurch gekennzeichnet,**
**dass** während oder nach den Stufen a) und/oder b) und/oder c) und/oder d) in beliebiger Weise 0 bis 50 Gewichtsteile einer Formulierungs-Komponente (M) zugesetzt und/oder 0 bis 50 Gewichtsteile einer Funktionalisierungs-Komponente (N) zugesetzt und/oder mit umgesetzt werden.

## Claims

1. Liquid fluorine-containing compositions having a fluorine content, based on the solid resin, of 5 to 75% by weight for the permanent surface treatment of porous and nonporous substrates, obtainable by first
a) preparing a perfluoroalkyl component (A) by
a₁) reacting 5 to 95% by weight of a (per)fluoroalkyl alcohol component (B)(i) comprising perfluoroalkyl alcohols having terminal methylene-groups (hydrocarbon spacers) of the general formula
CF₃- (CF₂)ₓ - (CH₂)_{y}-OH,
where x = 3 - 20 and y = 1 - 6
and/or
hexafluoropropene oxide (HFPO) oligomer alcohols of the general formula
CF₃CF₂CF₂O- (CF (CF₃) CF₂O)_{z}-CF (CF₃) CH₂-OH,
where z = 1 - 10
and/or
of a (per)fluoroalkylalkyleneamine component (B) (ii),
and/or
fluorine-modified macromonomers or telechelic polymers (B) (iii) having a polymer-bound fluorine content of 1 to 99% by weight and a molecular weight of 100 to 10 000 g/mol (daltons), containing the structural elements
- (CF₂CF₂)ₙ- where n ≥ 3
and/or
- (CF₂CFRO)ₙ- where n ≥ 3 and R = F, CF₃
arranged intrachenally and/or laterally and/or terminally in the main chain and/or side chain and having in each case one or more reactive aliphatic and/or aromatic hydroxyl group(s) and/or primary and/or secondary amino group(s) and/or mercapto group(s),
with
95 to 5% by weight of a component (C)(i), consisting of a 3-isocyanatopropyltrialkoxysilane and/or a 3-isocyanatopropylalkoxyalkylsilane and/or isocyanatoalkylalkoxysilanes of the general formula
OCN- (CH₂)₃-Si (OR1)₃₋ₓR²ₓ,
where x = 0, 1, 2
R¹, R² = alkyl having 1 - 25 C atoms,
and/or another isocyanatosilane component (C) (ii) having a molecular weight of 200 to 2000 g/mol (daltons) and one or more (cyclo)aliphatic and/or aromatic isocyanato group(s) and one or more alkoxysilane group(s) of the fluorine-containing compositions
or
with 95 to 5% by weight of an epoxyalkylolalkoxysilane component (F)(i), consisting of a (substituted) 3-glycidyloxypropyltrialkoxysilane of the general formula
CH₂OCH-CH₂O-(CH₂)₃-Si(OR¹)₃₋ₓR²x,
where x = 0, 1, 2
R¹, R² = alkyl having 1 - 25 C atoms,
and/or another epoxysilane component (F)(ii) having a molecular weight of 200 to 2000 g/mol (daltons) and one or more epoxide group(s) and one or more alkoxysilane group(s),
then
b) dissolving 5 to 100 parts by weight of the perfluoroalkyl component (A) from the stage a), before, during or after the reaction, in 0 to 100 parts by weight of a solvent component (K),
d₁) dissolving and oligomerizing the reaction product from the stage b) subsequently or simultaneously in 50 to 1000 parts by weight of water.

2. Fluorine-containing compositions according to Claim 1, **characterized in that** 3-isocyanatopropyltrimethoxysilane and/or 3-isocyanatopropyltriethoxysilane is used as component (C)(i).

3. Fluorine-containing compositions according to Claims 1 and 2, **characterized in that** 3-aminopropyltrimethoxysilane and/or 3-aminopropyltriethoxysilane and/or N-(2-aminoethyl)-3-aminopropyltrimethoxysilane and/or N-(2-aminoethyl)-3-aminopropyltriethoxysilane is used as component (E)(i).

4. Fluorine-containing compositions according to any of Claims 1 to 3, **characterized in that** 3-glycidyloxypropyltrimethoxysilane and/or 3-glycidyloxypropyltriethoxysilane is used as component (F)(i).

5. Fluorine-containing compositions according to any of Claims 1 to 4, **characterized in that** methanol, ethanol, propanol, isopropanol, n-butanol, isobutanol, tert-butanol, acetone, methyl ethyl ketone, N-methylpyrrolidone, dipropylene glycol dimethyl ether, cyclic propylene carbonates or a combination thereof are used as solvent component (K).

6. Fluorine-containing compositions according to any of Claims 1 to 5, **characterized in that** formic acid and/or acetic acid and/or carbon dioxide is used as component (L).

7. Fluorine-containing compositions according to any of Claims 1 to 6, **characterized in that** (functionalized) inorganic and/or organic fillers, light fillers, pigments and carrier materials, inorganic and/or organic nanomaterials, inorganic and/or organic fibres, further polymers and/or polymer dispersions and/or redispersible polymer powders of all types, antifoams, deaerators, lubricant and levelling additives, substrate wetting additives, wetting and dispersing additives, water repellents, rheology additives, coalescence auxiliaries, dulling agents, adhesion promoters, antifreezes, antioxidants, UV stabilizers, bactericides, fungicides, water, solvents and catalysts of all types and a suitable combination thereof are used as component (M).

8. Fluorine-containing compositions according to any of Claims 1 to 7, **characterized in that** the component (M) is present in coated and/or microencapsulated and/or carrier-fixed and/or hydrophilized and/or solvent-containing form.

9. Fluorine-containing compositions according to any of Claims 1 to 8, **characterized in that** low molecular weight polyols and/or polyamines having a molecular weight of 32 to 499 g/mol (daltons) and/or higher molecular weight (polymeric) polyols and/or polyamines having a molecular weight of 500 to 10 000 g/mol (daltons) and/or anionically and/or cationically modifiable (polymeric) polyols and/or polyamines having a molecular weight of 118 to 5000 g/mol (daltons) and/or (polymeric) compounds having a molecular weight of 250 to 10 000 g/mol (daltons) and at least one alkoxysilane group and optionally one or more amino and/or hydroxyl and/or mercapto and/or isocyanato and/or epoxy groups(s) are used as functionalization component (N), these compounds not being selected from the components (C), (E), (F), (G) and (I), wherein (G) is a (per) fluoroalkylene oxide component of the general formula CF₃-(CF₂)ₓ-(CH₂)y-CHOCH₂, where x = 3 to 20 and y = 1 to 6, and wherein (I) is a methacryloyloxyalkylalkoxysilane component (I)(i) of the general formula
CH₂=C(CH₃)-CO₂-(CH₂)₃-Si(OR¹)₃₋ₓR²ₓ,
where x = 0, 1, 2
R¹, R² = alkyl having 1 - 25 C atoms,
and/or another methacryloylsilane component (I)(ii) having a molecular weight of 200 to 2000 daltons.

10. Fluorine-containing compositions according to any of Claims 1 to 9, **characterized in that** dimethylolpropionic acid and/or hydroxypivalic acid and/or 2(3)-hydroxypropionic acid is used as functionalization component (N).

11. Fluorine-containing compositions according to any of Claims 1 to 10, **characterized in that** they have a fluorine content of 5 to 75% by weight, based on the solid resin comprising the components (B) and/or (C) and/or (E) and/or (F) and/or (L) and optionally (N) and contain the laterally and/or terminally arranged structural elements
- (CF₂CF₂)ₙ- where n ≥ 3
and/or
-(CF₂CFRO)ₙ- where n ≥ 3 and R = F, CF₃
and
-NR⁴₂H⁺ R⁵CO₂⁻
and/or
-NR⁴₂H⁺ HCO₃⁻ in combination with -CO₂H
where R⁴, R⁵ = H, any desired inorganic and/or organic and optionally polymeric radical having 1 to 100 C atoms and 0 to 100 N and/or 0 to 100 O and/or 0 to 1000 F and/or 0 to 100 Si atoms.

12. Process for the preparation of the fluorine-containing compositions according to Claims 1 to 11, **characterized in that**
a) a perfluoroalkyl component (A) is prepared by reacting
the components (B)(i) and/or (B)(ii) and optionally (B)(iii) with the components
(C)(i) and/or (C)(ii) or
(F)(i) and/or (F)(ii)
b) the perfluoroalkyl component (A) from stage a) is optionally dissolved in the solvent component (K) before, during or after the reaction,
c₁) the perfluoroalkyl component (A) from stages a) or b) is (partially) hydrolysed with water or silanolized optionally in the presence of a further aminoalkylalkoxysilane component(E)(i) and/or an aminosilane component (E)(ii),
c₂) the amino-functional adduct is quaternized (direct neutralization) with an acid component (L),
c₃) optionally the alcohol liberated and/or the solvent component (K) are removed,
d₁) the reaction product from stage c) is subsequently or simultaneously dissolved in water and oligomerized,
d₂) optionally the alcohol liberated and/or the solvent component (K) are removed,
e) optionally during or after stages a) and/or b) and/or c) and/or d), a formulation component (M) is added in any desired manner and/or a functionalization component (N) is added and/or is concomitantly reacted.

13. Process according to Claim 12, **characterized in that** the reaction stages c) and d) are combined in any desired manner and sequence.

14. Process according to either of Claims 12 to 13, **characterized in that** a transesterification of the alkoxysilane groups of the perfluoroalkyl component (A) with an alcoholic solvent component (K) is additionally carried out in stage b).

15. Process according to any of Claims 12 to 14, **characterized in that** the liberated alcohol and/or the solvent component (K) is removed by (azeotropic) distillation in stage d) and optionally the water withdrawn is added again subsequently or simultaneously.

16. Process according to any of Claims 12 to 15, **characterized in that** the acid component (L) in stage d) is present together with the water (indirect neutralization).

17. Process according to any of Claims 12 to 16, **characterized in that** the fluorine-containing compositions according to reaction stage a) are present in pure form.

18. Process according to any of Claims 12 to 16, **characterized in that** the fluorine-containing compositions according to reaction stage b) are present in solvent-containing form.

19. Process according to any of Claims 12 to 16, **characterized in that** the fluorine-containing compositions according to reaction stage d) are present in aqueous and optionally solvent-containing form.

20. Process according to any of Claims 12 to 19, **characterized in that** the reaction stage a) is carried out at a temperature of 40 to 120°C, preferably at 50 to 110°C.

21. Process according to any of Claims 12 to 20, **characterized in that** the reaction stage b) is carried out at a temperature of 20 to 60°C, preferably at 20 to 30°C.

22. Process according to any of Claims 12 to 21, **characterized in that** the reaction stages c) and d) are carried out at a temperature of 30 to 110°C, preferably at 40 to 100°C.

23. Process according to any of Claims 12 to 22, **characterized in that** the reaction stages c) and/or d) are carried out at a pH of 1 to 7, preferably at a pH of 2 to 6 and particularly preferably at a pH of 3 to 5.

24. Process according to any of Claims 12 to 23, **characterized in that** the equivalent ratio of fluorine atoms and nitrogen atoms in the reaction products of stages c) and d) is set at 1:50 to 50:1, preferably 1:25 to 25:1 and particularly preferably at 1:10 to 10:1.

25. Process according to any of Claims 12 to 24, **characterized in that** the equivalent ratio of alkoxysilane groups and water in stage c) is set at 1:10 to 10:1, preferably 1:5 to 5:1.

26. Process according to any of Claims 12 to 25, **characterized in that** the NCO/OH+NH₍₂₎ equivalent ratio of components (B) and (C) and optionally (N) in reaction stage a) is set at a value of 0.95 to 1.05 with component (C)(i) and/or (C)(ii).

27. Process according to any of Claims 12 to 26, **characterized in that** the reaction stage a) with component (C) (i) and/or (C)(ii) is carried out in the presence of 0.01 to 1% by weight, based on the reaction products, of a catalyst customary for polyaddition reactions with polyisocyanates.

28. Process according to any of Claims 12 to 27, **characterized in that** the reaction stage a) with component (F)(i) and/or (F)(ii) is carried out in the presence of 0.01 to 1% by weight, based on the reaction products, of a catalyst.

29. Process according to any of Claims 12 to 28, **characterized in that** the solids content of the fluorine-containing composition consisting of the components (B) and/or (C) and/or (F) and optionally (N) in reaction stages a) and b) is set at 10 to 100% by weight, preferably 100% by weight.

30. Process according to any of Claims 12 to 29, **characterized in that** the solids content of the fluorine-containing composition consisting of the components (B) and/or (C) and/or (E) and/or (F) and (L) and optionally (N) in the reaction stages d) and e) is set at 10 to 90% by weight, preferably 20% by weight.

31. Process according to any of Claims 12 to 30, **characterized in that** the pH of the fluorine-containing composition consisting of the components (B) and/or (C) and/or (E) and/or (F) and optionally (K) and (L) and optionally (M) and optionally (N) in the reaction stages d) and e) is set at 1 to 7, preferably 2 to 6.

32. Process according to any of Claims 12 to 31, **characterized in that** the viscosity (Brookfield) of the fluorine-containing composition consisting of the components (B) and/or (C) and/or (E) and/or (F) and optionally (K) and (L) and optionally (M) and optionally (N) in the reaction stages d) and e) is set at 1 to 10 000 mPa·s.

33. Use of the fluorine-containing compositions according to Claims 1 to 11 in the building or industrial sector for the permanent oil-, water-and dirt-repellent surface treatment or modification of mineral and nonmineral substrates, such as
• Inorganic surfaces, such as, for example, porous, absorptive, rough and polished building materials and structures of all types (such as, for example, concrete, gypsum, silica and silicates, artificial stone, natural stone (such as, for example, granite, marble, sandstone, slate, serpentine), clay, cement, brick) and enamel, fillers and pigments, glass and glass fibres, ceramic, metals and metal alloys,
• organic surfaces, such as, for example, woven fabrics and textiles, wood and wood-based materials, wood veneer, glass fibre-reinforced plastics (GFRP), plastics, leather, natural fibres, polymers of all types, composite materials.

34. Use of the fluorine-containing compositions according to Claims 1 to 11 for permanent oil-, water- and dirt-repellent surface treatment or modification in the building sector, such as, for example,
• antigraffiti coatings
• antisoiling coatings
• easy-to-clean coatings
• further coatings of all types (such as, for example, balcony coatings, roof (tile) coatings, stoving enamels, paints and finishes, masonry paints, floor coatings, industrial floors having a low, medium and high load capacity, parking floor coatings, sports floors, powder coatings)
• seals
• precast concrete parts
• moulded concrete parts
• tiles and joints
• adhesives and sealants
• noise control walls
• corrosion protection
• plasters and decorative plasters
• heat insulation composite systems and heat insulation systems

35. Use of the fluorine-containing compositions according to Claims 1 to 11 for permanent oil-, water- and dirt-repellent surface treatment or modification in the non-building and industrial sector, such as, for example,
• additives (such as, for example, adhesion promoters, release agents, crosslinking agents)
• automotive industry
• coil coatings
• stoving enamels
• paints and finishes
• coating of woven fabrics and textiles
• glass facades and glass surfaces
• ceramic and sanitaryware
• leather finishing
• surface-modified fillers and pigments
• paper coating
• rotors of wind power stations
• marine paints.

36. Use of the fluorine-containing compositions according to Claims 1 to 11 in the building or industrial sector for mass hydrophobization-/oleophobization of concrete, such as, for example,
• precast concrete parts
• moulded concrete parts
• in-situ concrete
• air-placed concrete
• ready-mix concrete.

37. Fluorine-containing compositions according to any of Claims 1 to 11, **characterized in that** the perfluoroalkyl component (A) from the stages a) or b) is (partially) hydrolysed or silanolized in the presence of 0 to 50 parts by weight of an aminoalkylalkoxysilane component (E)(i) and/or aminosilane component (E)(ii) with 1 to 50 parts by weight of water,
c₂) the amino-functional adduct is quaternized with 1 to 50 parts by weight of an acid component (L) (direct neutralization).

38. Fluorine-containing compositions according to any of Claims 1 to 11 or 37, **characterized in that** the alcohol liberated in step c₂) and/or the solvent component (K) is/are removed.

39. Fluorine-containing compositions according to any of Claims 1 to 11 or 37 or 38, **characterized in that** the alcohol liberated in step d₁) and/or the solvent component (K) is/are removed.

40. Fluorine-containing compositions according to any of Claims 1 to 11 or 37 to 39, **characterized in that** 0 to 50 parts by weight of a formulation component (M) are added during or after the stages a) and/or b) and/or c) and/or d) in any desired manner and/or 0 to 50 parts by weight of a functionalization component (N) are added and/or are concomitantly reacted.

## Revendications

1. Compositions liquides contenant du fluor, ayant une teneur en fluor par rapport à la résine solide de 5 à 75 % en poids, pour le traitement superficiel permanent de supports poreux et de supports non poreux, pouvant être obtenues d'abord
a) en préparant un composant perfluoroalkyle (A)
a₁) en faisant réagir 5 à 95 % en poids d'un composant (per)fluoroalkylalcool (B)(i) comprenant des perfluoroalkylalcools à groupes méthylène terminaux (espaceurs hydrocarbonés) de formule générale
CF₃-(CF₂)ₓ-(CH₂)_{y}-OH,
où x = 3 - 20 et y = 1 - 6
et/ou
des oligomère oxyde d'hexafluoropropène (HFPO)-alcools de formule générale
CF₃CF₂CF₂O- (CF (CF₃) CF₂O)_{z}-CF (CF₃) CH₂-OH
où z = 1 - 10
et/ou
un composant (per)fluoroalkylalkylène-amine (B)(ii)
et/ou
des macromonomères ou composés téléchéliques modifiés avec du fluor (B)(iii) ayant une teneur en fluor lié au polymère de 1 à 99 % en poids et une masse moléculaire de 100 à 10 000 g/mole (daltons), contenant l'élément structural en position intracaténaire et/ou latérale et/ou terminale dans la chaîne principale et/ou la chaîne latérale
-(CF₂CF₂)ₙ- où n ≥ 3
et/ou
-(CF₂CFRO)ₙ- où n ≥ 3 et R = F, CF₃
comportant chacun un ou plusieurs groupe(s) hydroxy et/ou groupe (s) amino primaire (s) et/ou secondaire(s) et/ou groupe(s) mercapto, aliphatique(s) et/ou aromatique(s) réactif(s),
avec
95 à 5 % en poids d'un composant (C)(i), consistant en un 3-isocyanatopropyltrialcoxysilane et/ou un 3-isocyanatopropylalcoxyalkylsilane et/ou isocyanatoalkylalcoxysilanes de formule générale
OCN- (CH₂)₃-Si (OR)₃₋ₓR²ₓ,
où x = 0, 1, 2
R¹, R² = alkyle ayant 1 - 25 atomes de carbone et/ou d'un autre composant isocyanatosilane (C)(ii) ayant une masse moléculaire de 200 à 2 000 g/mole (daltons), comportant un ou plusieurs groupe (s) isocyanato (cyclo) - aliphatique(s) et/ou aromatique(s) et un ou plusieurs groupe(s) alcoxysilane des compositions contenant du fluor
ou
avec 95 à 5 % en poids d'un composant époxyalkylolalcoxysilane (F)(i), consistant en un 3-glycidyloxypropyltrialcoxysilane (substitué) de formule générale
CH₂OCH-CH₂O-(CH₂)₃-Si (OR₁)₃₋ₓR²ₓ
où x = 0, 1, 2
R¹, R² = alkyle ayant 1-25 atomes de carbone,
et/ou d'un autre composant époxysilane (F) (ii) ayant une masse moléculaire de 200 à 2 000 g/mole (daltons), comportant un ou plusieurs groupe(s) époxy et un ou plusieurs groupe(s) alcoxysilane,
puis
b) en dissolvant 5 à 100 parties en poids du composant perfluoroalkyle (A) provenant de l'étape a), avant, pendant ou après la réaction, dans 0 à 100 parties en poids d'un composant solvant (K),
d₁) en dissolvant et oligomérisant ensuite ou en même temps le produit de réaction provenant de l'étape b) dans 50 à 1 000 parties en poids d'eau.

2. Compositions contenant du fluor selon la revendication 1,
**caractérisées en ce**
**qu'**on utilise comme composant (C) (i) le 3-isocyanatopropyltriméthoxysilane et/ou le 3-isocyanatopropyltriéthoxysilane.

3. Compositions contenant du fluor selon la revendication 1 ou 2,
**caractérisées en ce**
**qu'**on utilise comme composant (E)(i) le 3-aminopropyltriméthoxysilane et/ou le 3-aminopropyltriéthoxysilane et/ou le N-(2-aminoéthyl)-3-aminopropyltriméthoxysilane et/ou le N-(2-aminoéthyl)-3-aminopropyltriéthoxysilane.

4. Compositions contenant du fluor selon l'une quelconque des revendications 1 à 3,
**caractérisées en ce**
**qu'**on utilise comme composant (F)(i) le 3-glycidyloxypropyltriméthoxysilane et/ou le 3-glycidyloxypropyltriéthoxysilane.

5. Compositions contenant du fluor selon l'une quelconque des revendications 1 à 4,
**caractérisées en ce**
**qu'**on utilise comme composant solvant (K) le méthanol, l'éthanol, le propanol, l'isopropanol, le n-butanol, l'isobutanol, le tert-butanol, l'acétone, la méthyléthylcétone, la N-méthylpyrrolidone, l'éther diméthylique de dipropylèneglycol, des carbonates de propylène cycliques ou une association de ceux-ci.

6. Compositions contenant du fluor selon l'une quelconque des revendications 1 à 5,
**caractérisées en ce**
**qu'**on utilise comme composant (L) l'acide formique et/ou l'acide acétique et/ou le dioxyde de carbone.

7. Compositions contenant du fluor selon l'une quelconque des revendications 1 à 6,
**caractérisées en ce**
**qu'**on utilise comme composant (M) des charges organiques et/ou inorganiques (fonctionnalisées), des charges légères, des pigments et des substances porteuses, des nanomatériaux organiques et/ou inorganiques, des fibres organiques et/ou inorganiques, d'autres polymères et/ou des dispersions de polymères et/ou des poudres de polymères redispersables de tout type, des antimousses, des agents de désaération, des additifs lubrifiants et d'étalement, des additifs pour le mouillage du support, des additifs mouillants et dispersants, des agents d'hydrophobisation, des additifs de rhéologie, des adjuvants de coalescence, des agents de matité, des promoteurs d'adhérence, des antigels, des antioxydants, des stabilisants UV, des bactéricides, des fongicides, l'eau, des solvants et des catalyseurs de tout type ainsi qu'une association appropriée de ceux-ci.

8. Compositions contenant du fluor selon l'une quelconque des revendications 1 à 7,
**caractérisées en ce que**
le composant (M) se trouve sous forme enrobée et/ou microencapsulée et/ou fixée sur support et/ou hydrophilisée et/ou contenant un solvant.

9. Compositions contenant du fluor selon l'une quelconque des revendications 1 à 8,
**caractérisées en ce**
**qu'**on utilise comme composant de fonctionnalisation (N) des polyols de faible masse moléculaire et/ou des polyamines ayant une masse moléculaire de 32 à 499 g/mole (daltons) et/ou des polyols (polymères) de masse moléculaire relativement élevée et/ou des polyamines ayant une masse moléculaire de 500 à 10 000 g/mole (daltons) et/ou des polyols (polymères) susceptibles de modification anionique et/ou cationique et/ou des polyamines ayant une masse moléculaire de 118 à 5 000 g/mole (daltons) et/ou des composés (polymères) ayant une masse moléculaire de 250 à 10 000 g/mole (daltons), comportant au moins un groupe alcoxysilane et éventuellement un ou plusieurs groupe(s) amino et/ou hydroxy et/ou mercapto et/ou isocyanato et/ou époxy, ces composés n'étant pas choisis parmi les composants (C), (E), (F), (G) et (I), (G) étant un composant (per)fluoro-oxyalkylène de formule générale CF₃-(CF₂)ₓ-(CF₂)_{y}-CHOCH₂ où x = 3 à 20 et y = 1 à 6, et (I) étant un composant méthacryloyloxyalkylalcoxysilane (I)(i) de formule générale
CH₂=C(CH₃)-CO₂-(CH₂)₃-Si(OR¹)₃₋ₓR²ₓ,
où x = 0, 1, 2
R¹, R² = alkyle ayant 1 - 25 atomes de carbone,
et/ou un autre composant méthacryloylsilane (I)(ii) ayant une masse moléculaire de 200 à 2 000 daltons.

10. Compositions contenant du fluor selon l'une quelconque des revendications 1 à 9,
**caractérisées en ce**
**qu'**on utilise comme composant de fonctionnalisation (N) l'acide diméthylolpropionique et/ou l'acide hydroxypivalique et/ou l'acide 2(3)-hydroxypropionique.

11. Compositions contenant du fluor selon l'une quelconque des revendications 1 à 10,
**caractérisées en ce que**
celles-ci présentent une teneur en fluor de 5 à 75 % en poids par rapport à la résine solide à base des composants (B) et/ou (C) et/ou (E) et/ou (F) et/ou (L) et éventuellement (N) et comportent les éléments structuraux en position latérale et/ou terminale
-(CF₂CF₂)ₙ- où n ≥ 3
et/ou
-(CF₂CFRO)ₙ- où n ≥ 3 et R = F, CF₃
ainsi que
-NR⁴₂H⁺R⁵CO₂⁻
et/ou
-NR⁴₂H HC03 en association avec -CO₂H
où R⁴, R⁵ = H, un radical organique et/ou inorganique et éventuellement polymère quelconque ayant de 1 à 100 atomes de carbone et de 0 à 100 atomes d'azote et/ou de 0 à 100 atomes d'oxygène et/ou de 0 à 1 000 atomes de fluor et/ou de 0 à 100 atomes de silicium.

12. Procédé pour la préparation de compositions contenant du fluor selon les revendications 1 à 11, **caractérisé en ce qu'**on
a) prépare un composant perfluoroalkyle (A) par mise en réaction
des composants (B)(i) et/ou (B)(ii) ainsi qu'éventuellement (B)(iii) avec les composants
(C)(i) et/ou (C)(ii) ou
(F)(i) et/ou (F)(ii),
b) dissout éventuellement le composant perfluoroalkyle (A) provenant de l'étape a), avant, pendant ou après la réaction, dans le composant solvant (K),
c₁) silanolise ou hydrolyse (partiellement) avec de l'eau le composant perfluoroalkyle (A) provenant de l'étape a) ou b), éventuellement en présence d'un autre composant aminoalkylalcoxysilane (E)(i) et/ou d'un composant aminosilane (E)(ii),
c₂) soumet à une quaternisation (neutralisation directe) l'adduit à fonction amino à l'aide d'un composant acide (L),
c₃) éventuellement élimine l'alcool libéré et/ou le composant solvant (K),
d₁) ensuite ou en même temps dissout dans de l'eau et oligomérise le produit de réaction provenant de l'étape c),
d₂) élimine éventuellement l'alcool libéré et/ou le composant solvant (K),
e) éventuellement pendant ou après l'étape a) et/ou l'étape b) et/ou l'étape c) et/ou l'étape d) d'une façon quelconque ajoute un composant de formulation (M) et/ou ajoute et/ou met en réaction avec un composant de fonctionnalisation (N).

13. Procédé selon la revendication 12,
**caractérisé en ce**
**qu'**on combine d'une façon quelconque et en un ordre quelconque les étapes de réaction c) et d).

14. Procédé selon l'une quelconque des revendications 12 et 13,
**caractérisé en ce que**
dans l'étape b) on effectue en outre une transestérification des groupes alcoxysilane du composant perfluoroalkyle (A) avec un composant solvant (K) alcoolique.

15. Procédé selon l'une quelconque des revendications 12 à 14,
**caractérisé en ce que**
dans l'étape d) on sépare par distillation (azéotropique) l'alcool libéré et/ou le composant solvant (K) et éventuellement ensuite ou en même temps on ajoute de nouveau l'eau ainsi extraite.

16. Procédé selon l'une quelconque des revendications 12 à 15,
**caractérisé en ce que**
dans l'étape d) on dispose au préalable le composant acide (L) conjointement avec l'eau (neutralisation indirecte).

17. Procédé selon l'une quelconque des revendications 12 à 16,
**caractérisé en ce que**
les compositions contenant du fluor selon l'étape de réaction a) se trouvent sous forme pure.

18. Procédé selon l'une quelconque des revendications 12 à 16,
**caractérisé en ce que**
les compositions contenant du fluor selon l'étape de réaction b) se trouvent sous forme contenant un solvant.

19. Procédé selon l'une quelconque des revendications 12 à 16,
**caractérisé en ce que**
les compositions contenant du fluor selon l'étape de réaction d) se trouvent sous forme aqueuse et éventuellement contenant un solvant.

20. Procédé selon l'une quelconque des revendications 12 à 19,
**caractérisé en ce**
**qu'**on effectue l'étape de réaction a) à une température de 40 à 120 °C, de préférence de 50 à 110 °C.

21. Procédé selon l'une quelconque des revendications 12 à 20,
**caractérisé en ce**
**qu'**on effectue l'étape de réaction b) à une température de 20 à 60 °C, de préférence de 20 à 30 °C.

22. Procédé selon l'une quelconque des revendications 12 à 21,
**caractérisé en ce**
**qu'**on effectue les étapes de réaction c) et d) à une température de 30 à 110 °C, de préférence de 40 à 100 °C.

23. Procédé selon l'une quelconque des revendications 12 à 22,
**caractérisé en ce**
**qu'**on effectue les étapes de réaction c) et/ou d) à un pH de 1 à 7, de préférence à un pH de 2 à 6 et de façon particulièrement préférée à un pH de 3 à 5.

24. Procédé selon l'une quelconque des revendications 12 à 23,
**caractérisé en ce**
**qu'**on ajuste le rapport d'équivalents des atomes de fluor et des atomes d'azote dans les produits de réaction des étapes c) et d) à des valeurs de 1 : 50 à 50 : 1, de préférence de 1 : 25 à 25 : 1 et de façon particulièrement préférée de 1 : 10 à 10 : 1.

25. Procédé selon l'une quelconque des revendications 12 à 24,
**caractérisé en ce**
**qu'**on ajuste le rapport d'équivalents des groupes alcoxysilane et de l'eau dans l'étape c) à des valeurs de 1 : 10 à 10 : 1, de préférence de 1 : 5 à 5 : 1.

26. Procédé selon l'une quelconque des revendications 12 à 25,
**caractérisé en ce qu'**on ajuste le rapport d'équivalents NCO/OH+NH₍₂₎ des composants (B) et (C) et éventuellement (N) dans l'étape de réaction a) au composant C(i) et/ou au composant (C)(ii) à une valeur de 0,95 à 1,05.

27. Procédé selon l'une quelconque des revendications 12 à 26,
**caractérisé en ce**
**qu'**on effectue l'étape de réaction a) avec le composant (C)(i) et/ou le composant (C)(ii) en présence de 0,01 à 1 % en poids, par rapport aux produits de réaction, d'un catalyseur usuel pour des réactions de polyaddition sur des polyisocyanates.

28. Procédé selon l'une quelconque des revendications 12 à 27,
**caractérisé en ce**
**qu'**on effectue l'étape de réaction a) avec le composant (F)(i) et/ou le composant (F)(ii) en présence de 0,01 à 1 % en poids, par rapport aux produits de réaction, d'un catalyseur.

29. Procédé selon l'une quelconque des revendications 12 à 28,
**caractérisé en ce**
**qu'**on ajuste la teneur en matières solides de la composition contenant du fluor, consistant en les composants (B) et/ou (C) et/ou (F) et éventuellement (N) dans les étapes de réaction a) et b) à 10 à 100 % en poids, de préférence 100 % en poids.

30. Procédé selon l'une quelconque des revendications 12 à 29,
**caractérisé en ce**
**qu'**on ajuste la teneur en matières solides de la composition contenant du fluor, consistant en les composants (B) et/ou (C) et/ou (E) et/ou (F) et (L) et éventuellement (N) dans les étapes de réaction d) et e) à une valeur de 10 à 90 % en poids, de préférence de 20 % en poids.

31. Procédé selon l'une quelconque des revendications 12 à 30,
**caractérisé en ce**
**qu'**on ajuste le pH de la composition contenant du fluor, consistant en les composants (B) et/ou (C) et/ou (E) et/ou (F) et éventuellement (K) et (L) et éventuellement (M) et éventuellement (N) dans les étapes de réaction d) et e) à une valeur de 1 à 7, de préférence de 2 à 6.

32. Procédé selon l'une quelconque des revendications 12 à 31,
**caractérisé en ce**
**qu'**on ajuste la viscosité (Brookfield) de la composition contenant du fluor, consistant en les composants (B) et/ou (C) et/ou (E) et/ou (F) et éventuellement (K) et (L) et éventuellement (M) et éventuellement (N) dans les étapes de réaction d) et e) à une valeur de 1 à 10 000 mPa.s.

33. Utilisation des compositions contenant du fluor selon les revendications 1 à 11 dans le domaine du bâtiment ou de l'industrie pour le traitement permanent ou la modification permanente oléofuge, hydrofuge et antisalissure de surfaces de supports minéraux ou non minéraux, telles que
• des surfaces inorganiques,
comme par exemple des matières de construction et matériaux de construction poreux, absorbants, rugueux et polis de tout type (comme par exemple béton, plâtre, silice et silicates, pierre artificielle, pierre naturelle (comme par exemple granit, marbre, grès, schiste, serpentine), argile, ciment, brique) ainsi qu'émaux, charges et pigments, verre et fibres de verre, céramique, métaux et alliages métalliques,
• des surfaces organiques,
comme par exemple des tissus et textiles, le bois et des matériaux à base de bois, le placage de bois, des matières plastiques renforcées avec des fibres de verre (PFV), des matières plastiques, le cuir, des fibres naturelles, des polymères de tout type, des matériaux composites.

34. Utilisation des compositions contenant du fluor selon les revendications 1 à 11 pour le traitement permanent ou la modification permanente oléofuge, hydrofuge et antisalissure de surfaces dans le secteur du bâtiment, comme par exemple
• Antigraffiti Coatings
• Antisoiling Coaatings
• Easy-To-Clean Coatings
• autres revêtements de tout type (comme par exemple revêtements de balcons, revêtements de toits (de tuiles), laques à séchage au four, peintures et vernis, peintures pour façades, revêtements de sol, sols industriels à faible, moyenne et haute capacité de charge, revêtements de parkings, sols pour activités sportives, revêtements en poudre)
• revêtements d'étanchéité
• éléments préfabriqués en béton
• éléments moulés en béton
• carreaux et joints
• matières adhésives et d'étanchéité
• murs antibruit
• protection contre la corrosion
• enduits et enduits décoratifs
• systèmes composites d'isolation thermique (SCIT) et systèmes d'isolation thermique (SIT).

35. Utilisation des compositions contenant du fluor selon les revendications 1 à 11 pour le traitement permanent ou la modification permanente oléofuge, hydrofuge et antisalissure de surfaces dans le secteur hors bâtiment et l'industrie, comme par exemple
• additifs (par exemple promoteurs d'adhérence, agents de démoulage, agents de réticulation)
• industrie automobile
• Coil Coatings
• laques à séchage au four
• peintures et vernis
• revêtement de tissus et textiles
• façades en verre et surfaces de verre
• céramique et céramique sanitaire
• finissage du cuir
• pigments et charges modifiés en surface
• couchage du papier
• rotors d'éoliennes
• peintures pour bateaux.

36. Utilisation des compositions contenant du fluor selon les revendications 1 à 11 dans le secteur du bâtiment out de l'industrie pour l'hydrophobisation/ oléophobisation du béton dans la masse, comme par exemple
• éléments préfabriqués en béton
• éléments moulés en béton
• béton coulé sur place
• béton projeté
• béton transporté.

37. Compositions contenant du fluor selon l'une quelconque des revendications 1 à 11,
**caractérisées en ce que**
c₁) on silanolise ou hydrolyse (partiellement) le composant perfluoroalkyle (A) provenant de l'étape a) ou b) en présence de 0 à 50 parties en poids d'un composant aminoalkylalcoxysilane (E)(i) et/ou d'un composant aminosilane (E)(ii) avec 1 à 50 parties en poids d'eau,
c₂) on soumet à une quaternisation (neutralisation directe) l'adduit à fonction amino à l'aide de 1 à 50 parties en poids d'un composant acide (L).

38. Compositions contenant du fluor selon l'une quelconque des revendications 1 à 11 ou 37,
**caractérisées en ce**
**qu'**on élimine l'alcool libéré dans l'étape c₂) et/ou le composant solvant (K).

39. Compositions contenant du fluor selon l'une quelconque des revendications 1 à 11 ou 37 ou 38,
**caractérisées en ce**
**qu'**on élimine l'alcool libéré dans l'étape d₁) et/ou le composant solvant (K).

40. Compositions contenant du fluor selon l'une quelconque des revendications 1 à 11 ou 37 à 39,
**caractérisées en ce que**
pendant ou après l'étape a) et/ou l'étape b) et/ou l'étape c) et/ou l'étape d) d'une façon quelconque on ajoute 0 à 50 parties en poids d'un composant de formulation (M) et/ou on ajoute et/ou met en réaction avec 0 à 50 parties en poids d'un composant de fonctionnalisation (N).
